# EUROPEAN PATENT APPLICATION

(11) **EP 2 508 798 A1**
(43) Date of publication of application: **10.10.2012**
(21) Application number: 10834328.6
(22) Date of filing: 26.05.2010
(51) Int. Cl.: F21V 33/00, E06B 9/01, F21V 8/00, F21Y 101/02, F21Y 103/00

(54) **MANUFACTURING METHOD OF LIGHT GUIDE PLATE, LIGHT GUIDE PLATE, BACKLIGHT APPARATUS, ILLUMINATION APPARATUS, AND PARTITION BOARD APPARATUS**

(30) Priority: 03.12.2009 JP 2009275946
(71) Applicant: S.K.G. Co., Ltd., Aichi 465-0095 (JP)
(72) Inventor: SAKAMOTO, Mitsuhide, Ichinomiya-shi Aichi 491-0825 (JP); NAKASHIMA, Hiroshi, Ichinomiya-shi Aichi 491-0825 (JP); HATANO, Eisuke, Ichinomiya-shi Aichi 491-0825 (JP)
(74) Representative: Polypatent
(86) International application number: PCT/JP2010/003513
(87) International publication number: WO 2011/067871

(57) **Abstract**

It is an object to provide a partition plate device capable of rendering a light guide plate function as a transparent member likewise a window plate and as a light shielding member used as an area light source having a prescribed pattern. The invented partition plate device includes a light guide plate having, on double sides as major surfaces thereof, plural recess pattern scars formed partly melting through vibration of ultrasound under contacting fabrication dots provided in a matrix shape at an ultrasound fabrication horn to major surfaces thereof with pressure; and a light source unit rendering light enter from a side surface of the light guide plate and diffused light occur from the recess pattern scars, wherein the light guide plate functions as a transparent member while no light enters from the light source unit and functions as a light shielding member made of an area light source having a prescribed pattern formed with the recess pattern scars while light enters from the light source unit.

## Description

### Title of the Invention

Manufacturing Method for Light Guide Plate, Light Guide Plate, Back Light Device, Illumination Device, and Partition Plate Device

### Field of the Invention

This invention relates to a manufacturing method for a light guide plate for double side light emission in which flexible dot fabrication using a ultrasound processing horn can correspond to manufacturing light guide plates in a small quantity but many kinds from a small size to a relatively large size, to a light guide plate manufactured with the above manufacturing method, to a back light device and an illumination device formed with the light guide plate, and to a partition plate device employing the light guide plate for such as, e.g., windows of buildings

### Description of Related Art

In a light guide plate producing an area light source in use of an LED light, a light guide plate's structure has been known in having, e.g., reflection dots whose cross section is in a reversed wedge shape becoming broader as proceeding in a light flux's proceeding direction emitted from a light source, for a light guide plate used upon incorporated in a television set with a large monitor screen (see, e.g., Patent Document #1).

A thin type light guide plate has been used for an area type illumination device. As an illumination device thus formed, a structure has been known in which a prescribed pattern is formed on a surface of the light guide plate by, e.g., screen printing to utilize regular brightness changes based on the prescribed pattern as an illumination having a designing element (see, e.g., Patent Document #2).

### Prior Art Documents

### Patent Documents

Patent Document #1: Japanese Application Publication No. 2008-305713
Patent Document #2: Japanese Application Publication No. 2007-179770

### Summary of the Invention

### Problems to be solved by the Invention

With the structure described above, however, it is not easy to correspond to an arbitrary shape in productions of a small quantity and many kinds and to the optical characteristics suitable for the shape, and there raises a problem that it take a takt time for manufacture. Although it can be used as an illumination device while the light source is turned on to emit light from the light guide plate, the light guide plate by itself is useless while the light source is turned off. Particularly, with the back light device and the illumination device such as a display panel, the light guide plate is utilized only as an area light source of one side light emission.

It is therefore an object of the invention, in consideration of the above technical problems, to provide, for a light guide plate to be used for sign plates and advertisement boards from a small size to a relatively large size, a manufacturing method for light guide plate capable of corresponding to an arbitrary shape in productions of a small quantity and many kinds and to the optical characteristics suitable for the shape and capable of reducing largely the takt time for manufacture, to provide a light guide plate manufactured by the above manufacturing method, a back light device and an illumination device, which are formed with the above light guide plate, and to provide a partition plate device capable of rendering the light guide plate function as a transparent member likewise a window plate and also function as a light shielding member while used as an area light source having a prescribed pattern.

### Means for solving the problems

To solve the above described problems, a partition plate device according to the invention comprises: a light guide plate having, on double sides as major surfaces thereof, plural recess pattern scars formed partly melting through vibration of ultrasound under contacting fabrication dots provided in a matrix shape at an ultrasound fabrication horn to major surfaces thereof with pressure; and a light source unit rendering light enter from a side surface of the light guide plate and diffused light occur from the recess pattern scars, wherein the light guide plate functions as a transparent member while no light enters from the light source unit and functions as a light shielding member made of an area light source having a prescribed pattern formed with the recess pattern scars while light enters from the light source unit.

### Advantages of the Invention

According to the partition plate device of the invention, the partition plate device can render the light guide plate function as a transparent member likewise a window plate and also function as a light shielding member while used as an area light source having a prescribed pattern.

### Brief Description of the Drawings

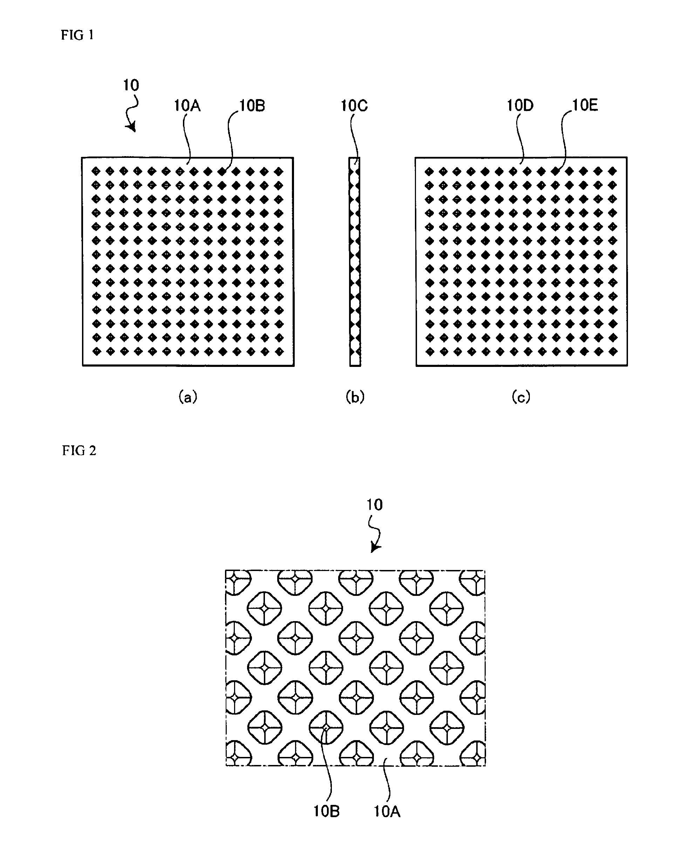

Figs. 1 are schematic views showing a light guide plate according to a first embodiment of the invention; (a) is a schematic view showing a front surface portion of the light guide plate; (b) is a schematic view showing a side surface portion of the light guide plate; (c) is a schematic view showing a back surface portion of the light guide plate.
Fig. 2 is a schematic view showing a part of the front surface portion of the light guide plate of the first embodiment of the invention.

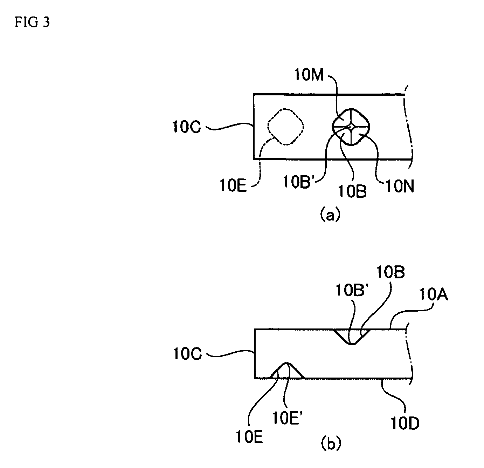

Fig. 3 is a schematic view showing recess pattern scars formed of pyramids on the light guide plate of the first embodiment of the invention; (a) is a schematic view showing the recess pattern scars when viewed from a major surface of the light guide plate; (b) is a schematic view showing the recess pattern scars when viewed from a side surface of the light guide plate.

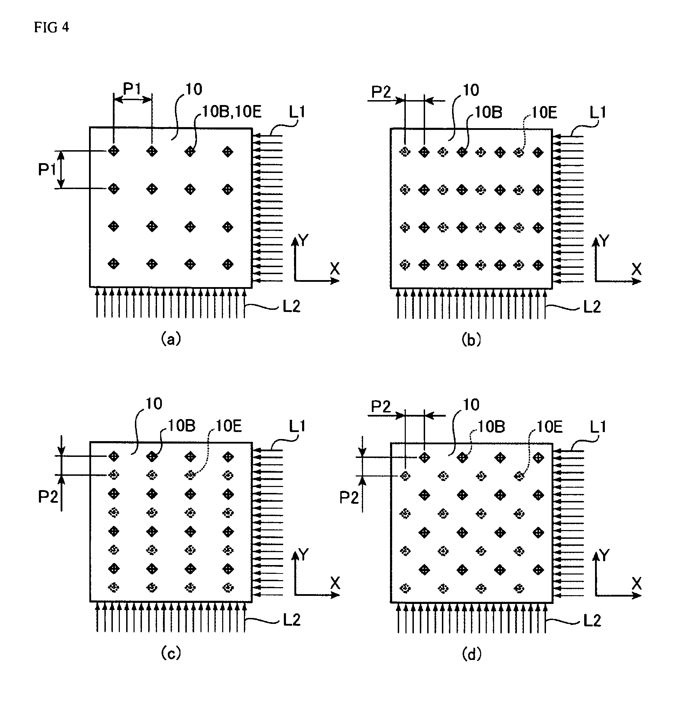

Figs. 4 are schematic views showing, in a transparent state, front surface portion recess pattern scars formed on a front surface portion and back surface portion recess pattern scars formed on a back surface portion of the light guide plate according to the first embodiment of the invention; (a) is a schematic view showing a state that the back surface portion recess pattern scars are formed at the same position between surfaces with respect to the front surface portion recess pattern scars; (b) is a schematic view showing a state that the back surface portion recess pattern scars are formed at a position shifted by a half pitch in an X direction with respect to the front surface portion recess pattern scars; (c) is a schematic view showing a state that the back surface portion recess pattern scars are formed at a position shifted by a half pitch in a Y direction with respect to the front surface portion recess pattern scars; (d) is a schematic view showing a state that the back surface portion recess pattern scars are formed at a position shifted by a half pitch in both of the X, Y directions with respect to the front surface portion recess pattern scars.

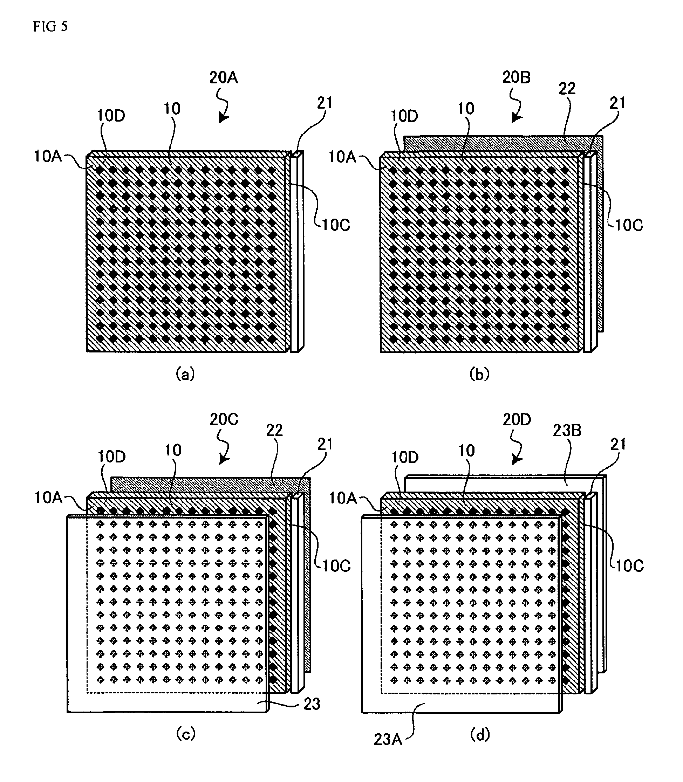

Figs. 5 are perspective views showing a back light device using the light guide plate according to the first embodiment of the invention in an exploded state to respective structural members; (a) is a perspective view showing the back light device in a case that no diffusing plate and no reflection sheet is provided on either surface of the light guide plate; (b) is a perspective view showing the back light device in a case that a reflection sheet is provided on only one surface of the light guide plate; (c) is a perspective view showing the back light device in a case that a diffusing plate is provided on only one surface of the light guide plate and that a reflection sheet is provided on the other surface of the light guide plate; (d) is a perspective view showing the back light device in a case that a diffusing plate is provided on each surface of the light guide plate.

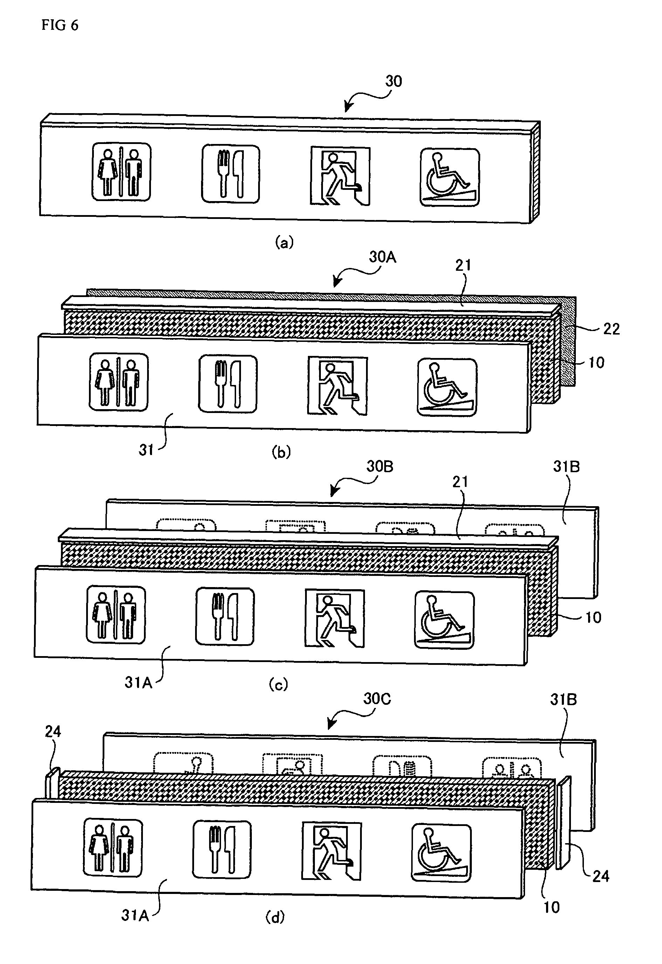

Figs. 6 are perspective views showing a sign light for the back light device using the light guide plate according to the first embodiment of the invention; (a) is a perspective view showing, in an assembled state, the sign light arranged with the light guide plate; (b) is a perspective view showing a state of a light guide plate arranged with a sign display plate on one surface and with a reflection sheet on the other surface; (c) is a perspective view showing a state of a light guide plate arranged with a sign display plate on each surface; (d) is a perspective view showing a sign display plate at which an LED unit is arranged on each end of the light guide plate.

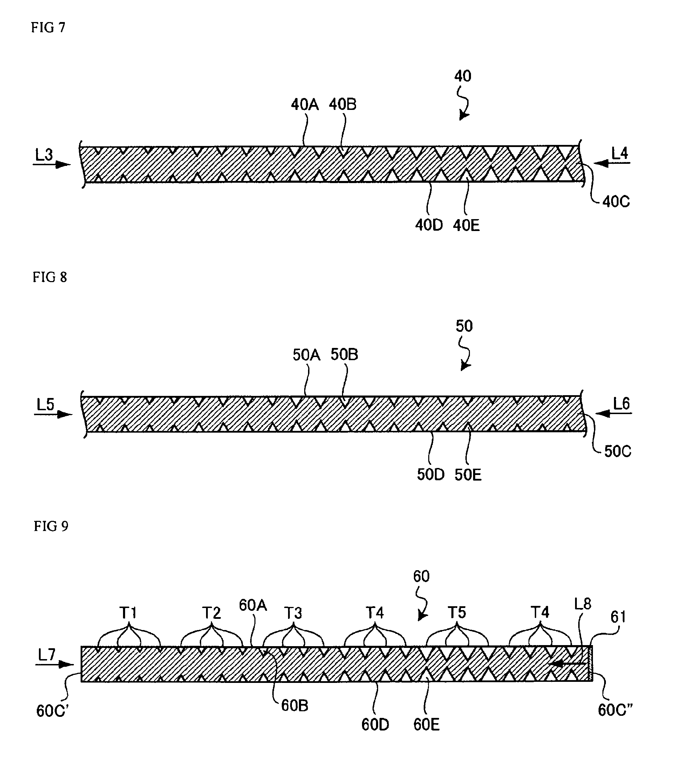

Fig. 7 is a schematic view showing a side surface portion of a light guide plate having different depths of front surface portion recess pattern scars and back surface portion recess pattern scars according to the second embodiment of the invention.
Fig. 8 is a schematic view showing a side surface portion of a light guide plate having different depths of front surface portion recess pattern scars and back surface portion recess pattern scars according to the second embodiment of the invention.
Fig. 9 is a schematic view showing a side surface portion of a light guide plate having different depths of front surface portion recess pattern scars and back surface portion recess pattern scars and a reflection tape adhered to the light guide plate according to the third embodiment of the invention.

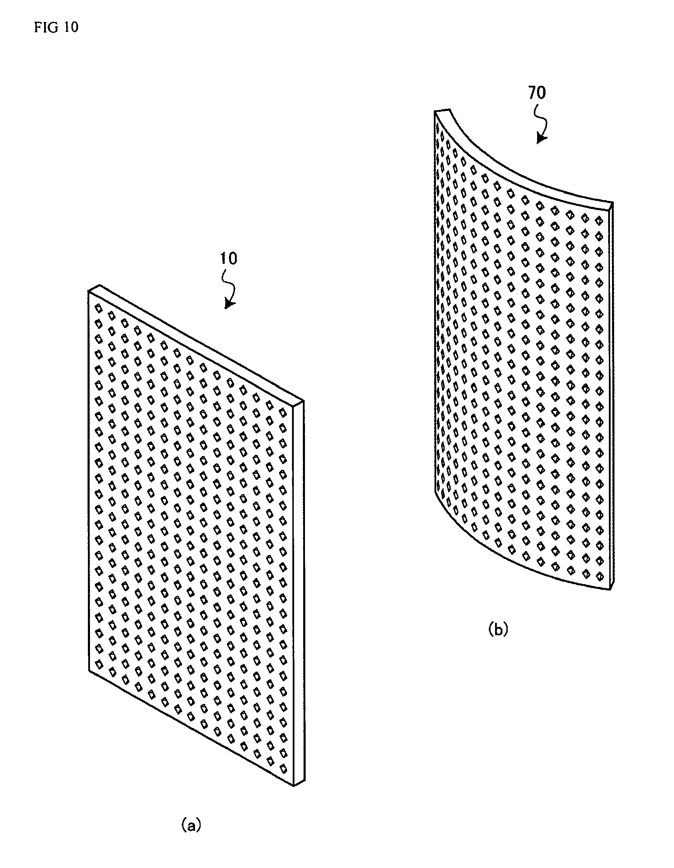

Figs. 10 are schematic views showing a manufacture of a light guide plate according to the fourth embodiment of the invention; (a) is a perspective view showing a light guide plate before fabrication for curving; (b) is a perspective view showing a light guide plate after fabrication for curving.

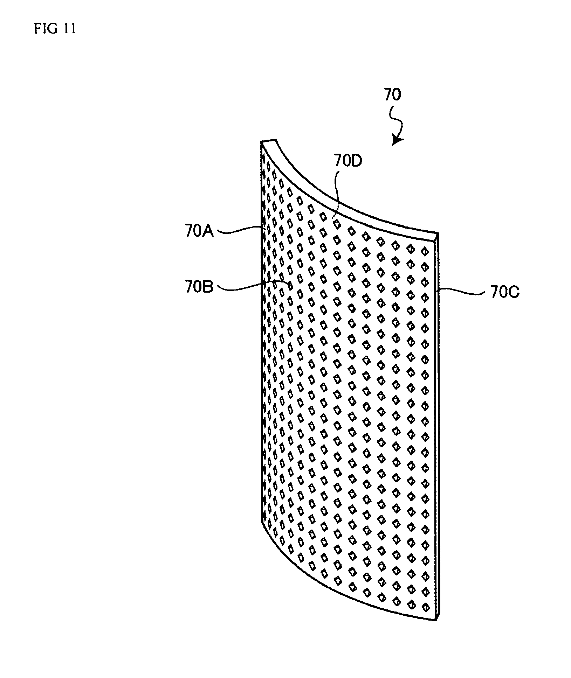

Fig. 11 is a perspective view showing a light guide plate according to the fourth embodiment of the invention.

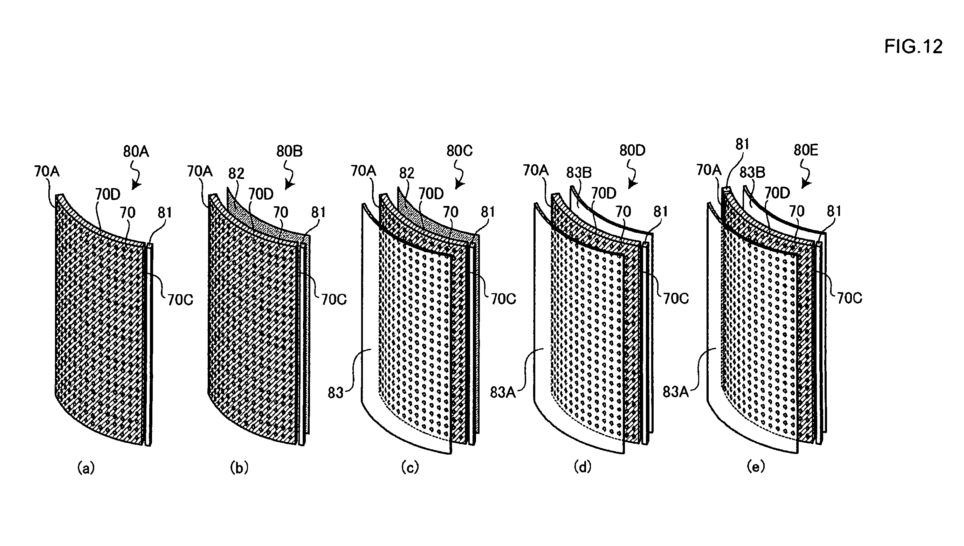

Figs. 12 are perspective views showing a back light device using the light guide plate according to the fourth embodiment of the invention in an exploded state to respective structural members; (a) is a perspective view showing the back light device in a case that no diffusing plate and no reflection sheet is provided on either surface of the light guide plate; (b) is a perspective view showing the back light device in a case that a reflection sheet is provided on only one surface of the light guide plate; (c) is a perspective view showing the back light device in a case that a diffusing plate is provided on only one surface of the light guide plate and that a reflection sheet is provided on the other surface of the light guide plate; (d) is a perspective view showing the back light device in a case that a diffusing plate is provided on each surface of the light guide plate; (e) is a perspective view showing the back light device at which an LED unit is arranged on each end of the light guide plate.

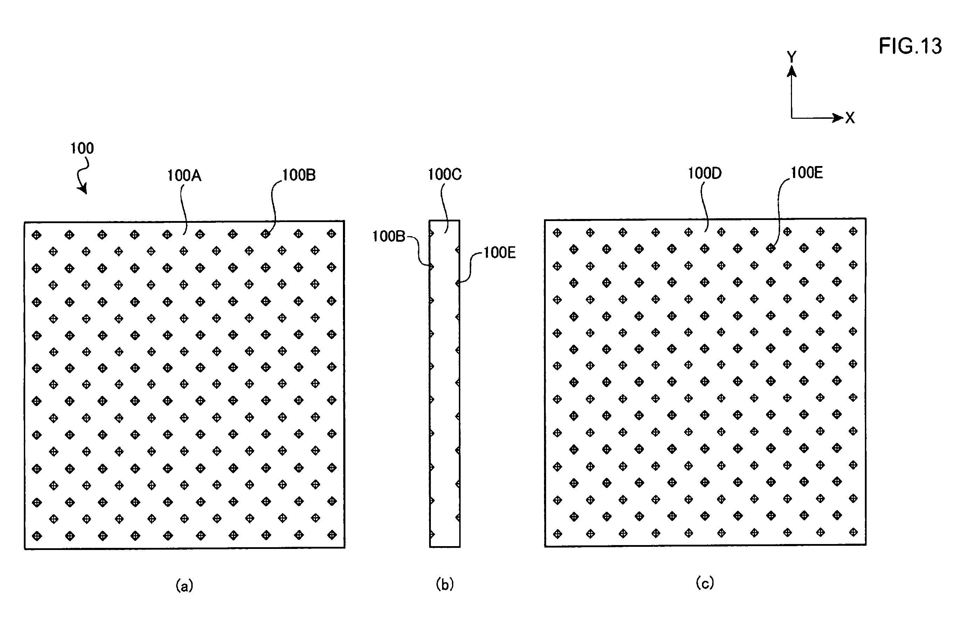

Figs. 13 are schematic views showing a light guide plate having a basic specification disposed at partition plate devices according to fifth through seventh embodiments of the invention; (a) is a schematic view showing a front surface portion of the light guide plate; (b) is a schematic view showing a side surface portion of the light guide plate; (c) is a schematic view showing a back surface portion of the light guide plate.

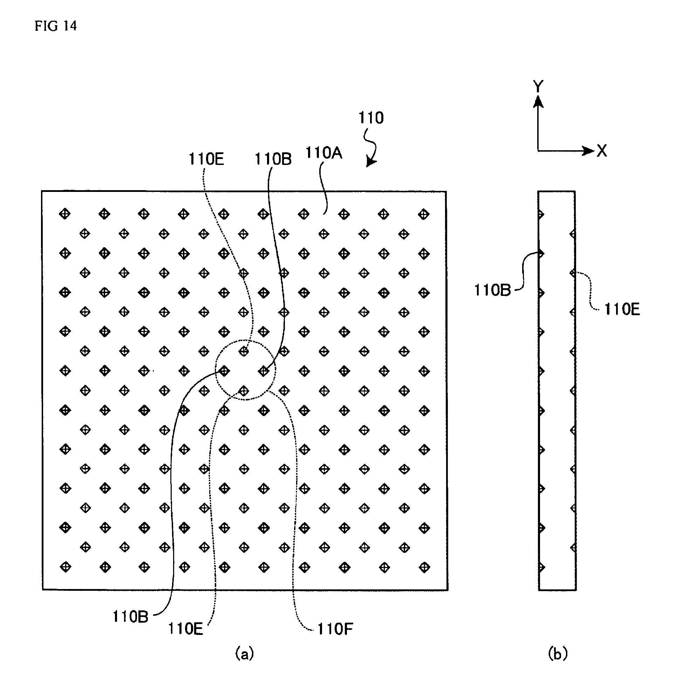

Figs. 14 are schematic views showing a light guide plate disposed at the partition plate device according to the fifth through seventh embodiments of the invention, which is formed so that the sizes and densities of the front surface portion recess pattern scars and the back surface portion recess pattern scars become the same and so that the position of the back surface portion recess pattern scars is shifted by a half pitch in directions of the X-axis and Y-axis with respect to the front surface portion recess pattern scars; (a) is a schematic view showing a front surface portion of the light guide plate; (b) is a schematic view showing a side surface portion of the light guide plate.

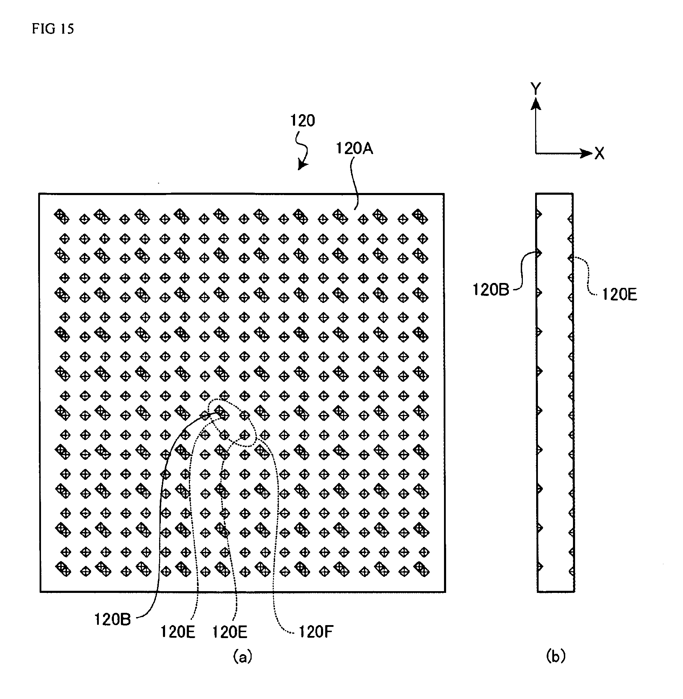

Figs. 15 are schematic views showing a light guide plate disposed at the partition plate device according to the fifth through seventh embodiments of the invention, which is formed so that the sizes of the front surface portion recess pattern scars and the back surface portion recess pattern scars become the same while the density of the back surface portion recess pattern scars is formed four times of that of the front surface portion recess pattern scars and so that the position of the back surface portion recess pattern scars is shifted by prescribed distances in directions of the X-axis and Y-axis with respect to the front surface portion recess pattern scars; (a) is a schematic view showing a front surface portion of the light guide plate; (b) is a schematic view showing a side surface portion of the light guide plate.

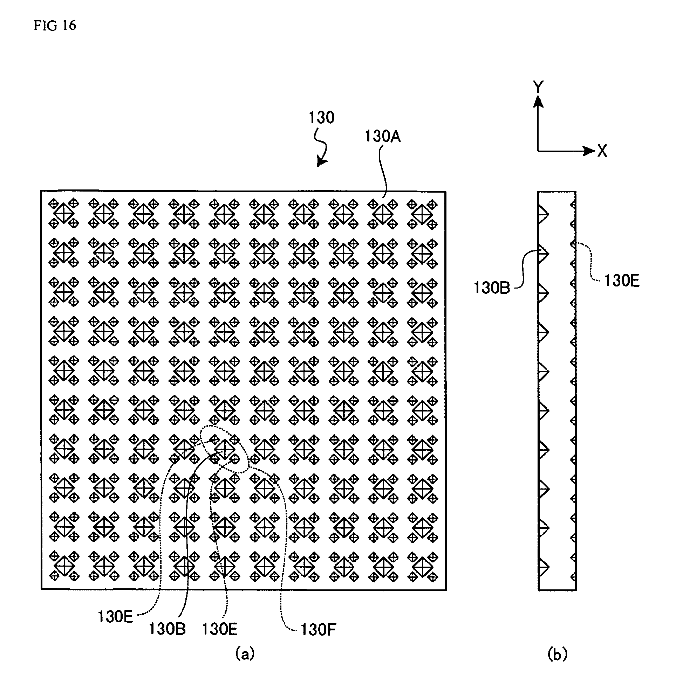

Figs. 16 are schematic views showing a light guide plate disposed at the partition plate device according to the fifth through seventh embodiments of the invention, which is formed so that the size of the front surface portion recess pattern scars is formed four times of that of the back surface portion recess pattern scars while the density of the back surface portion recess pattern scars is formed four times of that of the front surface portion recess pattern scars and so that the position of the back surface portion recess pattern scars is shifted by prescribed distances in directions of the X-axis and Y-axis with respect to the front surface portion recess pattern scars; (a) is a schematic view showing a front surface portion of the light guide plate; (b) is a schematic view showing a side surface portion of the light guide plate.

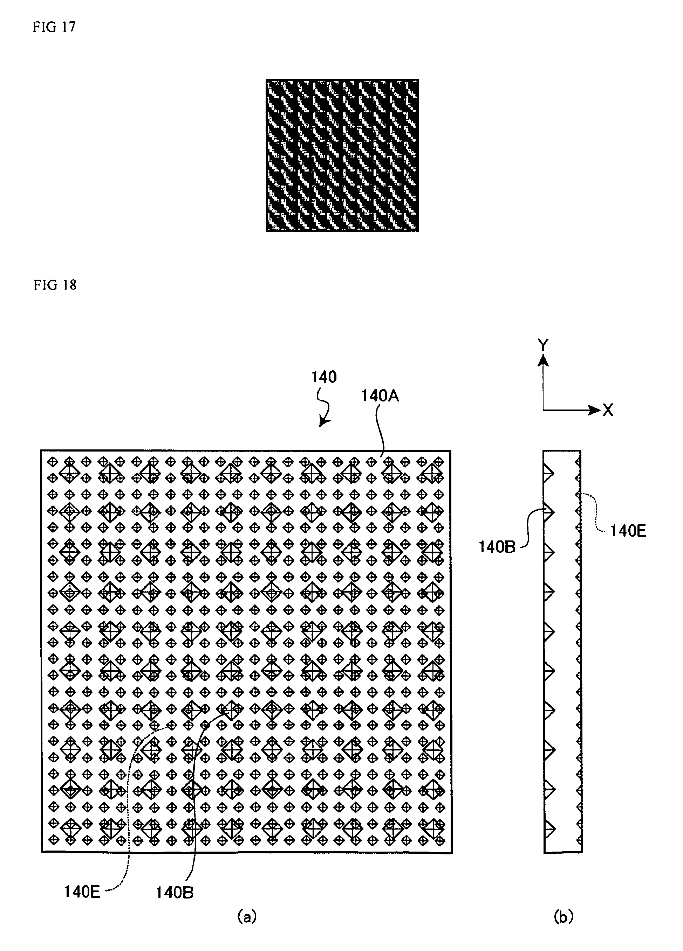

Fig. 17 is a diagram showing a part of the front surface portion of the light guide plate shown in Fig. 16 disposed at the partition plate device according to the fifth through seventh embodiments of the invention.
Figs. 18 are schematic views showing a light guide plate disposed at the partition plate device according to the fifth through seventh embodiments of the invention, which is formed so that the size of the front surface portion recess pattern scars is formed four times of that of the back surface portion recess pattern scars while the density of the back surface portion recess pattern scars is formed approximately six times of that of the front surface portion recess pattern scars; (a) is a schematic view showing a front surface portion of the light guide plate; (b) is a schematic view showing a side surface portion of the light guide plate.

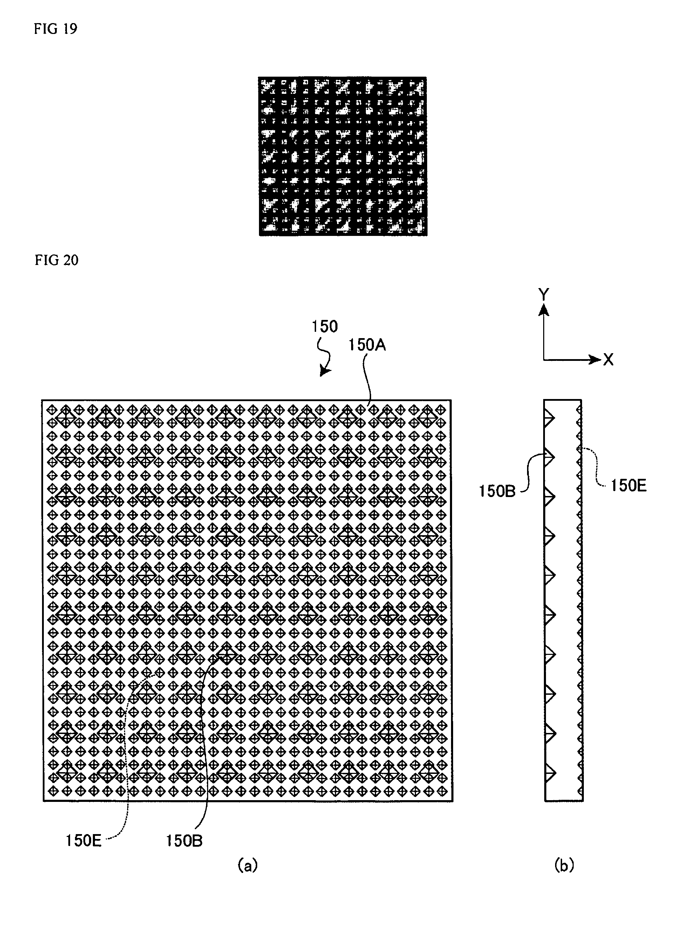

Fig. 19 is a diagram showing a part of the front surface portion of the light guide plate shown in Fig. 18 disposed at the partition plate device according to the fifth through seventh embodiments of the invention.
Figs. 20 are schematic views showing a light guide plate disposed at the partition plate device according to the fifth through seventh embodiments of the invention, which is formed so that the size of the front surface portion recess pattern scars is formed four times of that of the back surface portion recess pattern scars while the density of the back surface portion recess pattern scars is formed nine times of that of the front surface portion recess pattern scars; (a) is a schematic view showing a front surface portion of the light guide plate; (b) is a schematic view showing a side surface portion of the light guide plate.

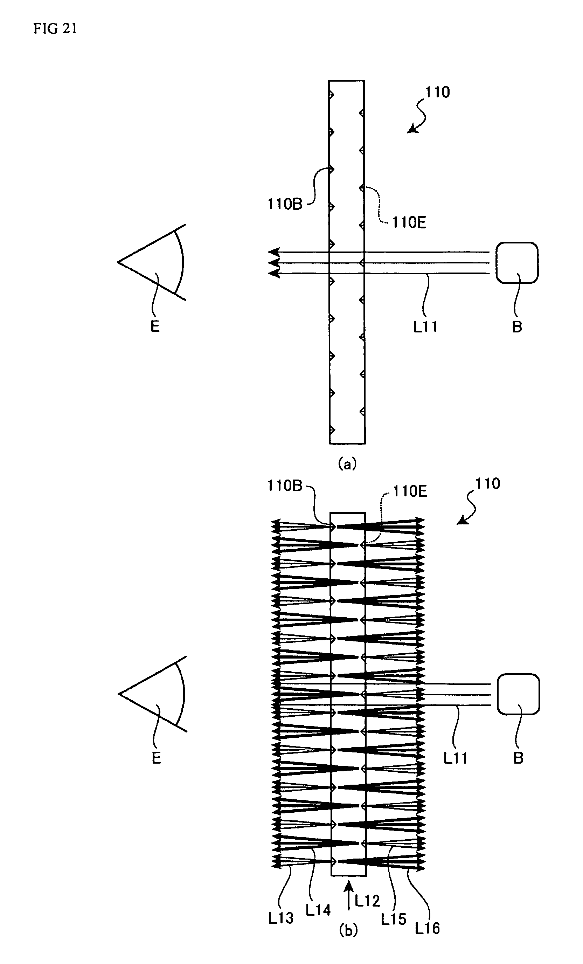

Figs. 21 are schematic views showing a state that an object is viewed through a light guide plate disposed at the partition plate device according to the fifth through seventh embodiments of the invention; (a) is a schematic view showing a state that the object is viewed at a time that light does not enter into a side surface of the light guide plate; (b) is a schematic view showing a state that the object is viewed at a time that diffused light is generated at the recess pattern scars in the front surface portion and the back surface portion by light entering from a side surface portion of the light guide plate disposed at the partition plate device and that the diffused light is discharged as an area light source.

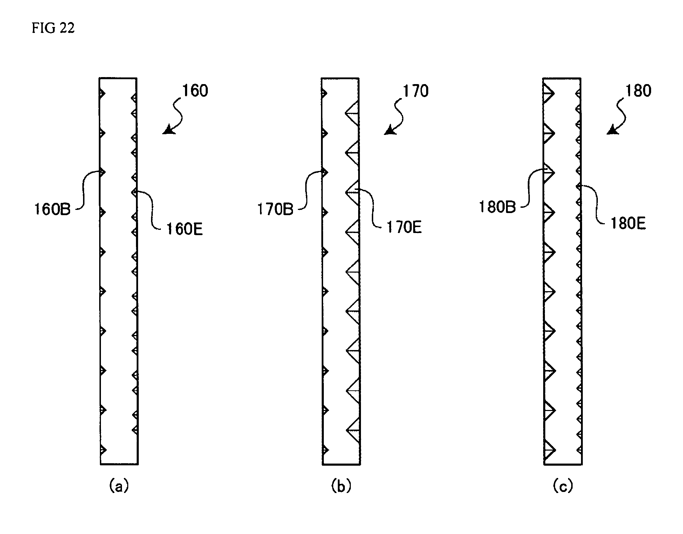

Figs. 22 are schematic views showing side surface portions of plural light guide plates having various recess pattern scars disposed at the partition plate device according to the fifth through seventh embodiments of the invention; (a) through (c) are the schematic views showing the side surface portion of the respective light guide plates.

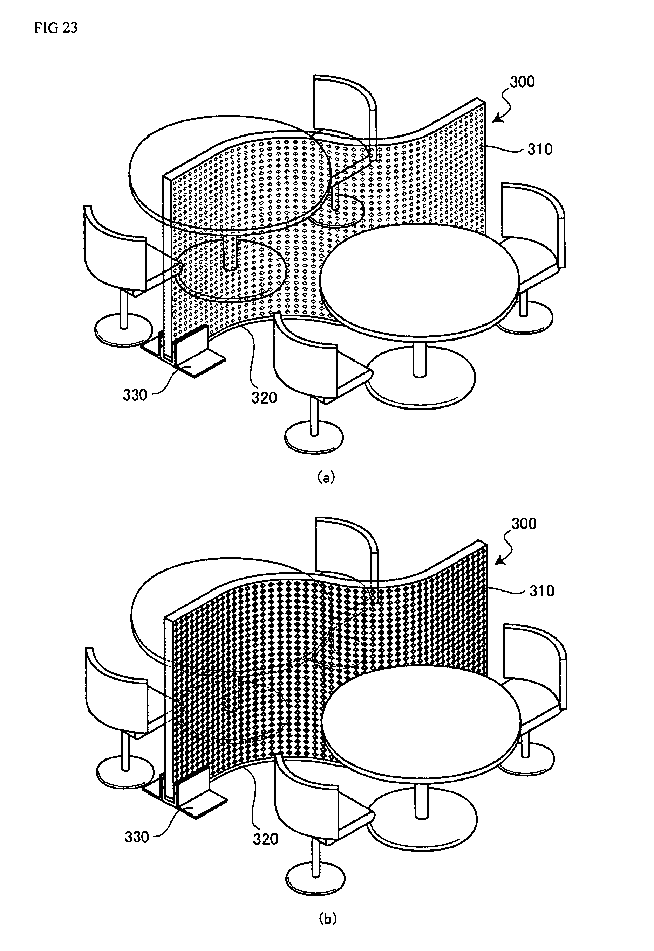

Figs. 23 are schematic views showing a state that the partition plate device for partition for sectioning according to the fifth embodiment of the invention is provided between tables; (a) is a schematic view showing a state that no light enters into a side surface portion of the light guide plate disposed at the partition plate device; (b) is a schematic view showing a state that diffused light is generated at the recess pattern scars in the front surface portion and the back surface portion from the light entered through the side surface portion of the light guide plate disposed at the partition plate device to discharge the diffused light as an area light source.

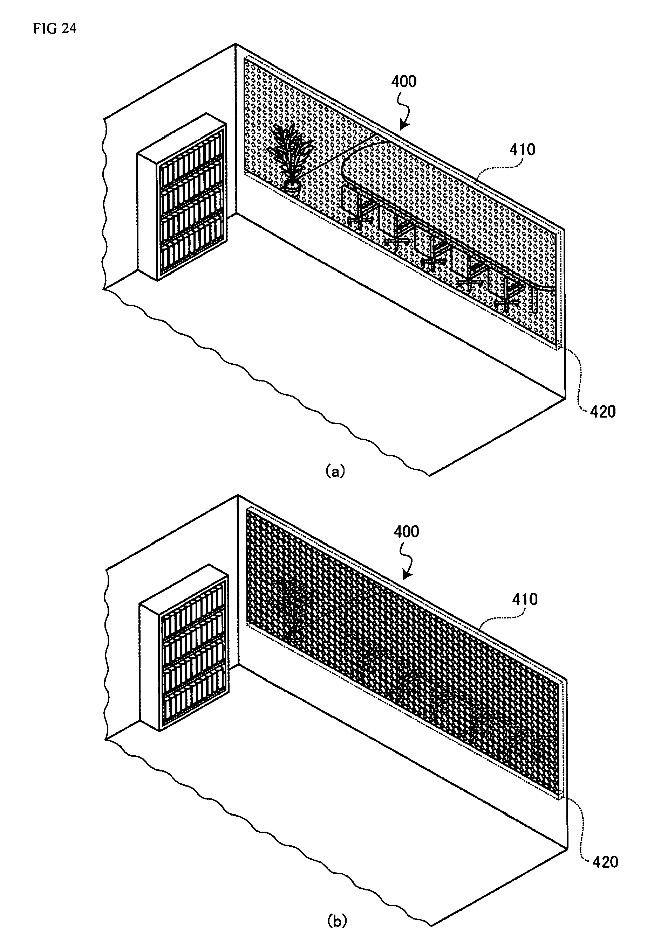

Figs. 24 are schematic views showing a state that a partition plate device for inner wall window of a building according to the sixth embodiment of the invention is built in an inner wall; (a) is a schematic view showing a state that no light enters into the side surface portion of the light guide plate disposed at the partition plate device; (b) is a schematic view showing a state that diffused light is generated at the recess pattern scars in the front surface portion and the back surface portion from the light entered through the side surface portion of the light guide plate disposed at the partition plate device to discharge the diffused light as an area light source.

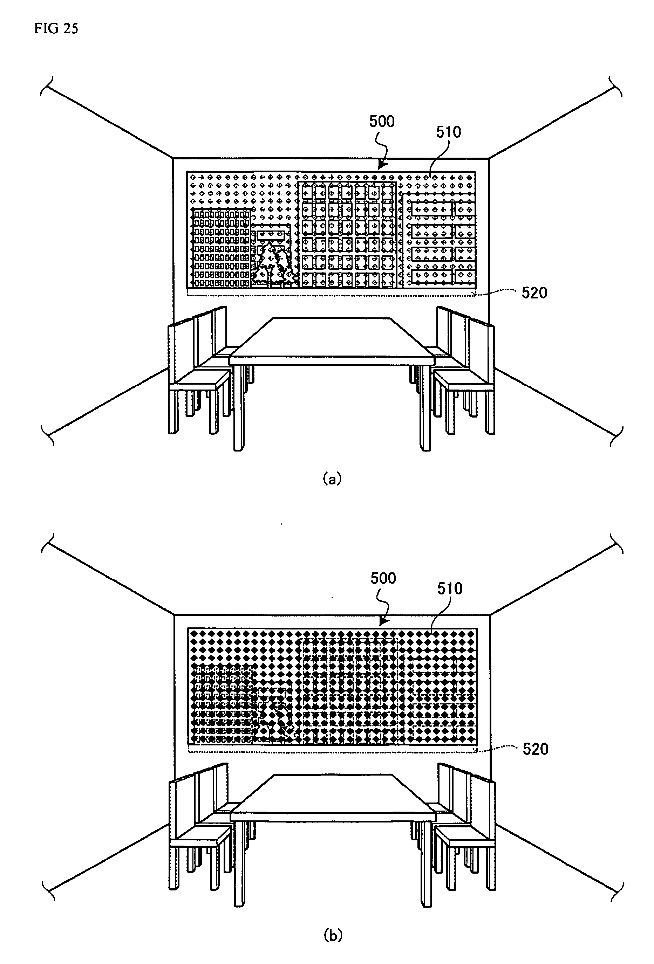

Figs. 25 are schematic views showing a state that a partition plate device for outer wall window of a building according to the seventh embodiment of the invention is built in an outer wall; (a) is a schematic view showing a state that no light enters into the side surface portion of the light guide plate disposed at the partition plate device; (b) is a schematic view showing a state that diffused light is generated at the recess pattern scars in the front surface portion and the back surface portion from the light entered through the side surface portion of the light guide plate disposed at the partition plate device to discharge the diffused light as an area light source.

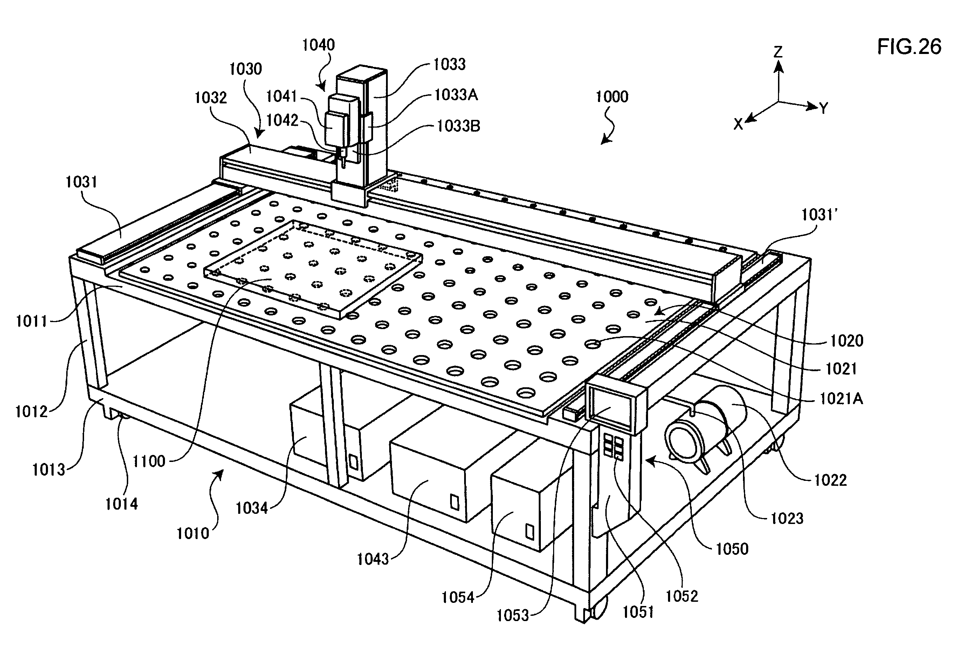

Fig. 26 is a perspective view showing a fabrication apparatus for light guide plate for fabricating the light guide plate disposed at the respective devices according to the first through seventh embodiments of the invention.

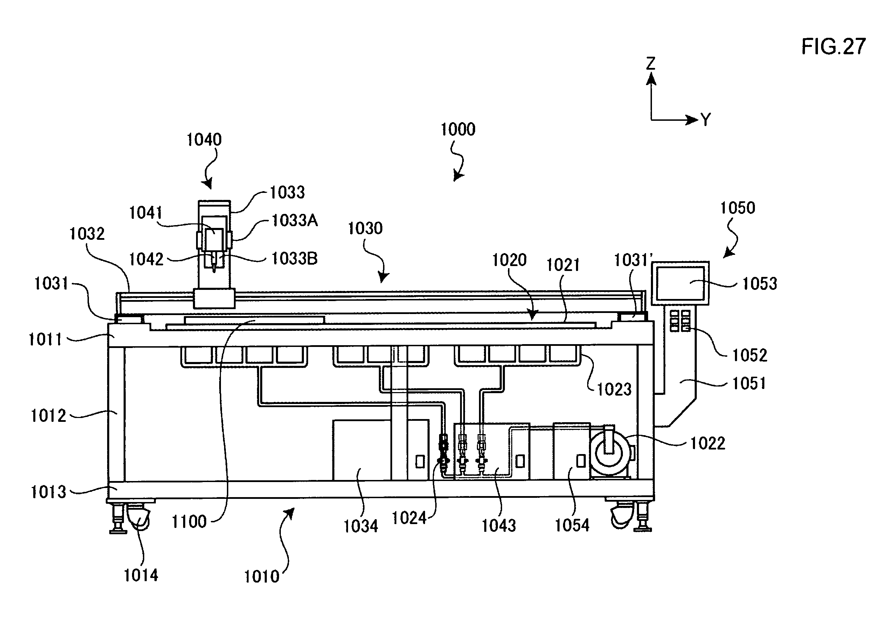

Fig.27 is a front view showing the fabrication apparatus for light guide plate for fabricating the light guide plate disposed at the respective devices according to the first through seventh embodiments of the invention.

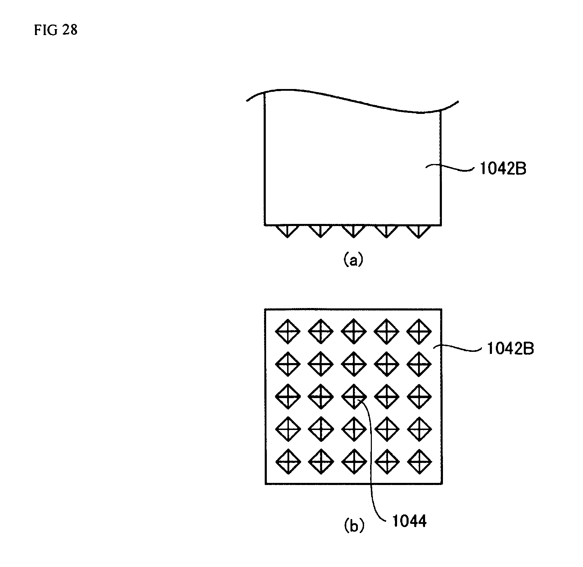

Figs. 28 are schematic views showing a tip portion of an ultrasound processing horn of an ultrasound processing portion disposed at the fabrication apparatus for light guide plate for fabricating the light guide plate disposed at the respective devices according to the first through seventh embodiments of the invention; (a) is a schematic view showing a side surface of the tip portion of the ultrasound processing horn; (b) is a schematic view showing a processing surface of the tip portion of the ultrasound processing horn.

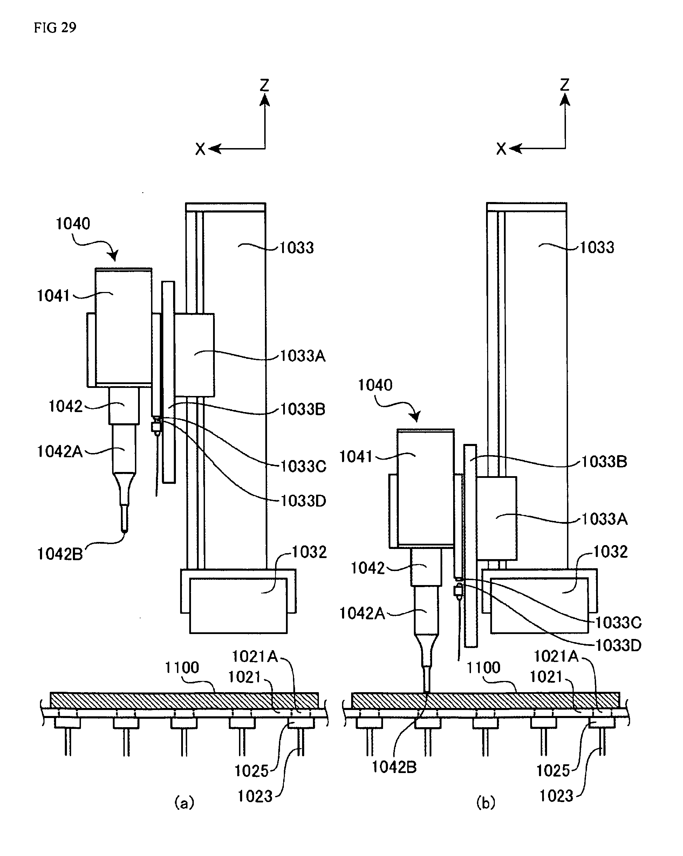

Figs. 29 are side views showing ultrasound processing to a light guide plate substrate by means of the ultrasound processing portion disposed at the fabrication apparatus for light guide plate for fabricating the light guide plate disposed at the respective devices according to the first through seventh embodiments of the invention; (a) is a side view showing a state before the light guide plate substrate is subject to the ultrasound processing; (b) is a side view showing a state while the light guide plate substrate is subject to the ultrasound processing.

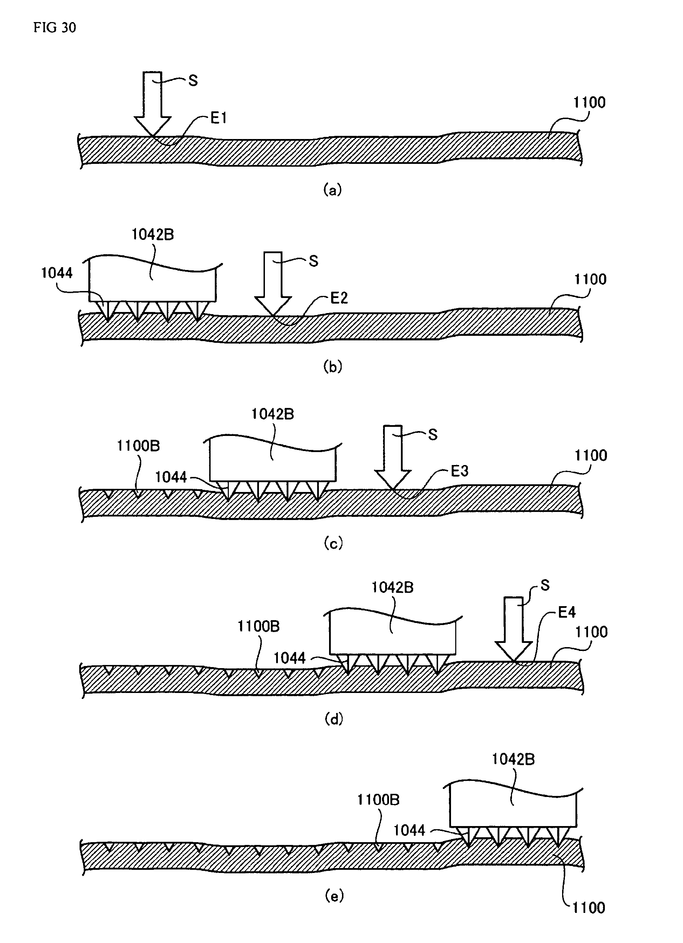

Figs. 30 are schematic views showing a state of the embossing process for forming recess pattern scars formed on the light guide plate disposed at the respective devices according to the first through seventh embodiments of the invention; (a) through (e) are schematic views sequentially showing states of measuring the processing start reference height of a light guide plate prior to the embossing process and then performing the embossing process to the light guide plate in compliance with the processing start reference height.

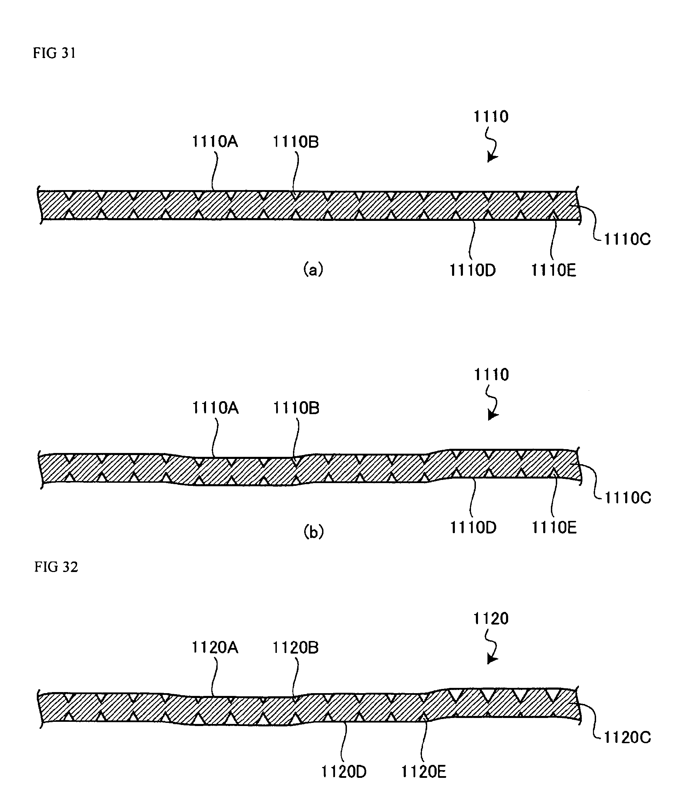

Figs. 31 are schematic views showing a side surface portion of the light guide plate disposed at the respective devices according to the first through seventh embodiments of the invention; (a) is a schematic view showing the side surface portion of the light guide plate in a case where the light guide plate has no curving or deviation in thickness; (b) is a schematic showing the side surface portion of the light guide plate in a case where the light guide plate has some curving or deviation in thickness.
Fig. 32 is a schematic view showing a side surface portion of the light guide plate in a case where the light guide plate has some curving or deviation in thickness during conventional manufacturing of light guide plate.

### Embodiments to Employ the Invention

Hereinafter, referring to the drawings, preferred embodiments regarding a light guide plate, a back light device, an illumination device, and a partition plate device, according to the invention are described. It is to be noted that the light guide plate, the back light device, the illumination device, and the partition plate device, according to the invention are not limited to those described below and are properly modifiable as far as not deviated from the subject matter of the invention.

In the description below, first, referring to Fig. 1 through Fig. 6, a light guide plate, a back light device, and an illumination device of the invention are described. Referring to Fig. 7 and Fig. 8, the light guide plates formed at the back light device and at the illumination device according to the second embodiment of the invention are described next. Referring to Fig. 9, the light guide plates formed at the back light device and at the illumination device according to the third embodiment of the invention are described next. Referring to Fig. 10 through Fig. 12, the back light device and at the illumination device according to the fourth embodiment of the invention are described next. Referring to Fig. 13 through Fig. 22, the structure and advantages of the light guide plate disposed at partition plate devices commonly according to the fifth through the seventh embodiments of the invention are described next. Referring to Fig. 23, the structure and advantages of the light guide plate disposed at a partition plate device 300 for a sectioning partition according to the fifth embodiment of the invention are described next. Referring to Fig. 24, the structure and advantages of a partition plate device 400 for an inner wall window of a building according to the sixth embodiment of the invention are described next. Referring to Fig. 25, the structure and advantages of a partition plate device 500 for an outer wall window of a building according to the seventh embodiment of the invention are described next. Finally, a manufacturing apparatus for light guide plate for processing light guide plates disposed at respective devices according to the first through seventh embodiments of the invention and a manufacturing method for light guide plates using the manufacturing apparatus for light guide plate are described in reference to Fig. 26 through Fig. 32.

### First Embodiment

Hereinafter, referring to Fig. 1 through Fig. 6, a light guide plate 10, a back light device, and an illumination device according to the first embodiment are described specifically.

First, a structure of the light guide plate 10 manufactured by a manufacturing method for the light guide plate 10 according to this invention is described in reference to Fig. 1 and Fig. 2. It is to be note that Figs. 1 are schematic views showing the light guide plate 10; Fig. 1 (a) is the schematic view showing a front surface portion 10A of the light guide plate 10; Fig. 1(b) is the schematic view showing a side surface portion 10C of the light guide plate 10; and Fig. 1 (c) is the schematic view showing a back surface portion 10D of the light guide plate 10. Fig. 2 is a schematic view showing a part of the front surface portion 10A of the light guide plate 10 in an enlarged manner.

The light guide plate 10 is structured of a plate shaped portion made of. e. g. a polymethyl methacrylate resin plate formed in a prescribed size with plural recess pattern scars. More specifically, the size of the plate shaped portion is in a rectangular shape of 100 mm x 100 mm through 1450 mm x 1030 mm equivalent to B0 size (JIS standard) and corresponds to a thickness of 2 mm through 12 mm. As shown in Fig. 1, front surface portion recess pattern scars 10B are formed on the front surface portion 10A of the light guide plate 10 whereas back surface portion recess pattern scars 10E are formed on the back surface portion 10D of the light guide plate 10. The recess pattern scars are respectively formed in a pyramid shape scar having, e.g., a long diameter of 0.6 mm and a depth of 0.4 mm and are formed with a pitch of, e.g., 1.2, 1.5, 2.0, and 8.0 mm as for a pitch pattern in a matrix shaped molding scar.

Next, recess pattern scars made of pyramids formed on the light guide plate 10 are described specifically in reference to Fig. 3. Figs. 3 are schematic views showing the recess pattern scars made of pyramids formed on the light guide plate 10; Fig. 3(a) is the schematic view showing the recess pattern scars viewing from the front surface portion 10A of the light guide plate 10; Fig. 3(b) is the schematic view showing the recess pattern scars viewing from the side surface portion 10C of the light guide plate 10.

In the light guide plate 10, diffused light can be outputted effectively from the front surface portion 10A and the back surface portion 10D by rendering the recess pattern made of the pyramids possess a rectangular face at the lowest portion. More specifically, a part of light entered from the side surface portion 10C is radiated to, e.g., the lowest portion 10B' of the front surface portion recess pattern scars 10B formed at the front surface portion 10A , and is reflected toward the back surface portion 10D in a direction away from the side surface portion 10C. Similarly, a part of the light entered from the side surface portion 10C is radiated to, e.g., the lowest portion 10E' of the back surface portion recess pattern scars 10E formed on a side of the back surface portion 10D, and is reflected toward the front surface portion 10A in a direction away from the side surface portion 10C. Accordingly, the light entered from the side surface portion 10C can be effectively converted to the diffused light and be outputted from the front surface portion 10A and the back surface portion 10D.

In regard to the detail of the recess pattern formed at the light guide plate, the diffused light can be directly outputted effectively from the front surface portion 10A and the back surface portion 10D by rendering the recess pattern made of the pyramids possess a rectangular face at the lowest portion. More specifically, if the recess pattern is made in a pure pyramid shape, the diffused light generated near the lowest portion of the pyramid is largely attenuated by multiple reflections near the lowest portion because a distance from one surface 10M to the other surface 10N opposing thereto at the tip portion is very short, and cannot be directly outputted from the front surface portion 10A and the back surface portion 10D. To the contrary, in a case that the recess pattern has a face made in a rectangular shape at the lowest portion of the pyramid, the diffused light generated near the lowest portion of the pyramid can be directly outputted from the front surface portion 10A and the back surface portion 10D prior to multiple reflection, because there is a certain distance between the one surface 10M and the other surface 10N opposing thereto near the lowest portion. Therefore, the incident light from the side surface portion 10C can be effectively outputted from the major surfaces.

Optical specifications of the light guide plate 10 manufactured by the manufacturing method for the light guide plate 10 are described next. More specifically, the Optical specification regarding the recess pattern scars formed on double sides of the light guide plate 10 is described specifically in reference to Fig. 4.

Figs. 4 are schematic views showing the front surface portion recess pattern scars 10B formed at the front surface portion 10A of the light guide plate with a pitch P1 and the back surface portion recess pattern scars 10E formed at the back surface portion 10D with the pitch P1 in a transparent state; Fig. 4(a) shows a state that the back surface portion recess pattern scars 10E are formed at the same position between surfaces with respect to the front surface portion recess pattern scars 10B; Fig. 4(b) shows a state that the back surface portion recess pattern scars 10E are formed at a position shifted by a half pitch P2 in an X direction with respect to the front surface portion recess pattern scars 10B; Fig. 4 (c) shows a state that the back surface portion recess pattern scars 10E are formed at a position shifted by the half pitch P2 in a Y direction with respect to the front surface portion recess pattern scars 10B; Fig. 4 (d) shows a state that the back surface portion recess pattern scars 10E are formed at a position shifted by the half pitch P2 in both of the X, Y directions with respect to the front surface portion recess pattern scars 10B.

LED light is respectively radiated to the front surface portion recess pattern scars 10B formed at the front surface portion 10A of the light guide plate and to the back surface portion recess pattern scars 10E formed at the back surface portion 10D. More specifically, in each of Fig. 4(a) through Fig. 4(d), incident light L1 of the LED light is radiated in the horizontal direction X in Fig. 4 to the recess pattern scars. Similarly, in each of Fig. 4(a) through Fig. 4(d), incident light L2 of the LED light is radiated in the vertical direction Y in Fig. 4 to the recess pattern scars. Hereinafter, in regard with optical characteristics for the specification of the recess pattern scars, optical characteristics under three conditions in which the back surface portion recess pattern scars 10E are formed at a position shifted by the half pitch P2 with respect to the front surface portion recess pattern scars 10B shown in Fig. 4(a) through Fig. 4(d) where the state that the back surface portion recess pattern scars 10E are formed at the same position between surfaces with respect to the front surface portion recess pattern scars 10B is set as a standard condition.

First, the optical characteristics under the condition that the back surface portion recess pattern scars 10E are formed at a position shifted by the half pitch P2 in the X direction with respect to the front surface portion recess pattern scars 10B as shown in Fig. 4(b) are described in comparison with Fig. 4(a). With this condition, the density recognizable by viewing the recess pattern scars formed on the light guide plate 10 in the X direction viewable from a side of the front surface portion 10A of the light guide plate 10 becomes twice in comparing the case in Fig. 4(a). Therefore, because bright points made from the recess pattern scars viewable from the side of the front surface portion 10A of the light guide plate 10 become twice in the X direction in comparing the case in Fig. 4(a), differences between brightness and darkness of the light come to be smaller. The density recognizable by viewing the recess pattern scars formed on the light guide plate 10 in the Y direction viewable from a side of the front surface portion 10A of the light guide plate 10 is the same as that in the case in Fig. 4(a). Therefore, in comparison with the case in Fig. 4(a), differences between brightness and darkness of the light in the Y direction are the same.

The optical characteristics under the condition that the back surface portion recess pattern scars 10E are formed at a position shifted by the half pitch P2 in the Y direction with respect to the front surface portion recess pattern scars 10B as shown in Fig. 4(c) are described in comparison with Fig. 4(a). With this condition, the density of the recess pattern scars formed on the light guide plate 10 in the Y direction viewable from a side of the front surface portion 10A of the light guide plate 10 becomes twice in comparing the case in Fig. 4(a). Therefore, because diffused light due to the recess pattern scars viewable from the side of the front surface portion 10A of the light guide plate 10 become twice in the Y direction in comparing the case in Fig. 4(a), differences between brightness and darkness of the light come to be smaller. The density of the recess pattern scars formed on the light guide plate 10 in the X direction viewable from a side of the front surface portion 10A of the light guide plate 10 is the same as that in the case in Fig. 4(a). Therefore, in comparison with the case in Fig. 4(a), differences between brightness and darkness of the light in the X direction are the same.

The optical characteristics under the condition that the back surface portion recess pattern scars 10E are formed at a position shifted by the half pitch P2 in both of the X, Y directions with respect to the front surface portion recess pattern scars 10B as shown in Fig. 4(d) are described in comparison with Fig. 4(a). With this condition, the density of the recess pattern scars formed on the light guide plate 10 in the X, Y directions viewable from a side of the front surface portion 10A of the light guide plate 10 becomes twice respectively in comparing the case in Fig. 4(a). Therefore, because diffused light due to the recess pattern scars viewable from the side of the front surface portion 10A of the light guide plate 10 become twice in both of the X, Y directions in comparing the case in Fig. 4(a), differences between brightness and darkness of the light come to be smaller.

As described in referring to Fig. 4(a) through 4(d), the optical characteristics can be selected arbitrarily by forming the position of the back surface portion recess pattern scars 10E to be shafted in the X, Y directions with respect to the front surface portion recess pattern scars 10B. Under the condition shown in Fig. 4(d), the differences between brightness and darkness of the light become smaller in both of the X, Y directions, in comparing the case in Fig. 4(a), so that good optical characteristics can be obtained.

Next, referring to Fig. 5(a) through Fig. 5(d), a structural example of a back light device 20 arranged with the light guide plate 10 according to this embodiment is described specifically.

Figs. 5 are perspective views showing the back light device 20 using the light guide plate 10 according to this embodiment in an exploded state to respective structural members; Fig. 5(a) is the perspective view showing the back light device 20A in a case that no diffusing plate 23 and no reflection sheet 22 is provided on either surface of the light guide plate 10; Fig. 5(b) is the perspective view showing the back light device 20B in a case that the reflection sheet 22 is provided on only one surface of the light guide plate 10; Fig. 5(c) is the perspective view showing the back light device 20C in a case that the diffusing plate 23 is provided on only one surface of the light guide plate 10 and that the reflection sheet 22 is provided on the other surface of the light guide plate 10; Fig. 5(d) is the perspective view showing the back light device 20D in a case that the diffusing plate 23A and the diffusing plate 23B are provided respectively on double surfaces of the light guide plate 10. Hereinafter, the respective back light devices 20 shown in Fig. 5(a) through Fig. 5(d) are described sequentially.

First, with the back light device 20A shown in Fig. 5(a), an LED unit 21 constituted of white LEDs more than one piece is provided as to face to the side surface portion 10C of the light guide plate 10. Where white LED light is entered into the light guide plate 10 by application of drive currents to the white LEDs, the white LED light is radiated to the recess pattern scars formed at the front surface portion 10A and the back surface portion 10D of the light guide plate 10, thereby generating the diffused light respectively. The diffused light is further made outgoing to the front surface portion 10A and the back surface portion 10D.

With the back light device 20B shown in Fig. 5(b), the reflection sheet 22 is provided as to face to the back surface portion 10D of the light guide plate 10 formed at the back light device 20A. In the back light device 20B, the diffused light discharged from a side of the back surface portion 10D is reflected on the reflection sheet 22, and after entering into the light guide plate 10, the incident light is outputted from a side of the front surface portion 10A.

With the back light device 20C shown in Fig. 5(c), the diffusing plate 23 is provided as to face to the front surface portion 10A of the light guide plate 10 formed at the back light device 20B. In the back light device 20C, the diffused light discharged from the front surface portion 10A is entered into the diffusing plate 23, and the diffused light is further diffused at the diffusing plate 23. Consequently, the bright points located in a dispersing manner become obscure, thereby rending the diffusing plate 23 become a uniformly light emitting surface. A semi-transparent white plate, for example, may be used for the diffusing plate 23.

With the back light device 20D shown in Fig. 5(d), the diffusing plate 23A and the diffusing plate 23B are provided respectively as to face to the front surface portion 10A and the back surface portion 10D of the light guide plate 10 formed at the back light device 20A. In the back light device 20D, the diffused light discharged from the front surface portion 10A is entered into the diffusing plate 23A provided as to face to the front surface portion 10A, and the diffused light is further diffused at the diffusing plate 23A. In substantially the same way, the diffused light discharged from the back surface portion 10D is entered into the diffusing plate 23B provided as to face to the back surface portion 10D, and the diffused light is further diffused at the diffusing plate 23B. Consequently, the bright points located in a dispersing manner become obscure, thereby rending the diffusing plate 23A and the diffusing plate 23B commonly become uniformly light emitting surfaces.

Next, a sign light 30 serving as an example of an illumination device having a back light device arranged with the light guide plate 10 according to this embodiment is described specifically in referring to Fig. 6(a) through 6(d).

Figs. 6 are perspective views showing the sign light 30 for the back light device using the light guide plate 10; Fig. 6(a) is a perspective view showing, in an assembled state, the sign light 30 arranged with the light guide plate 10; Fig. 6(b) is a perspective view showing a state of a light guide plate 10 arranged with a sign display plate 31 on one surface and with a reflection sheet 22 on the other surface; Fig.6 (c) is a perspective view showing a state of a light guide plate 10 arranged with a sign display plate 31A and a sign display plate 31B on both surfaces, respectively; Fig. 6(d) is a perspective view showing a sign display plate 31C at which an LED unit 24 is arranged on each end of the light guide plate 10 using the sign display plate 31B shown in Fig. 6(c). Hereinafter, the sign lights 30 in association with the respective back light devices shown in Fig. 6(a) through Fig. 6(d) are described subsequently.

The sign light 30 is made of, e.g., the light guide plate 10, the LED unit 21, and the sign display plate 31 as shown in Fig. 6(a). With the sign light 30A shown in Fig. 6(b), the LED unit 21 is disposed as to face to the side surface portion 10C of the light guide plate 10. The reflection sheet 22 is disposed as to face to the back surface portion 10D of the light guide plate 10. The sign display plate 31 is disposed as to face to the front surface portion 10A of the light guide plate 10. The sign display plate 31 uses, e.g., a semi-transparent white plate having a surface adhered with a sheet printing a sign for standard guidance or the like. Such the sign light 30A can be a display device emitting light on a single side, and is equivalent to an application product in association with the back light device 20C as shown in Fig. 5(c).

Similarly, with a sign light 30B shown in Fig. 6(c), the LED unit 21 is disposed as to face to the side surface portion 10C of the light guide plate 10. The sign display plate 31A and the sign display plate 31 B are disposed respectively as to face to the front surface portion 10A and the back surface portion 10D of the light guide plate 10. The sign display plate 31A and the sign display plate 31 B use respectively, e.g., a semi-transparent white plate having a surface adhered with a sheet printing a sign for standard guidance or the like. Such the sign light 30B can be a display device emitting light on double sides, and is equivalent to an application product in association with the back light device 20D as shown in Fig. 5(d). A sign display plate 31C shown in Fig. 6(d) prevents a center of the light guide plate 10 from darkening in comparison with both ends thereof by arranging the LED units 24 on right and left sides of the light guide plate 10 in a rectangular shape extending in a horizontal direction.

According to the light guide plate 10 of the first embodiment, with the manufacturing method for light guide plate using a manufacturing apparatus for light guide plate 1000 as described below, plural reflection dots reflecting fabrication dots extending in a matrix shape can be formed at one time on one major surface of the light guide plate 1100 by pressing a ultrasound processing portion 1030 formed with the fabrication dots extending in the matrix shape to one major surface of the light guide plate 1100. The ultrasound processing portion 1030 thus formed with the fabrication dots extending in the matrix shape can correspond to flexible dot fabrications using an ultrasound multi-horn for manufacture of the light guide plate from a small size to a relatively large size in a small quality but many kinds, thereby largely reducing the takt time for manufacture. More specifically, according to the ultrasound processing portion 1030 formed with the fabrication dots extending in the matrix shape of four rows and four columns, the takt time for manufacturing the light guide plate 10 is reduced to one sixteenth (1/16) in comparison with the case of a ultrasound processing portion 1030 having a single fabrication dot.

According to the light guide plate 10 of the first embodiment, optical characteristics regarding differences between brightness and darkness of the light can be arbitrarily chosen by forming the position of the back surface portion recess pattern scars 10E shifted in the X, Y directions with respect to the front surface portion recess pattern scars 10B. For example, by forming the position of the back surface portion recess pattern scars 10E shifted by the half pitch P2 in the X, Y directions with respect to the front surface portion recess pattern scars 10B, the differences between brightness and darkness of the light can be reduced in both of the X, Y directions.

Similarly, with the back light device according to the first embodiment, a display device emitting light on a single side or double sides such as, e.g., the sign light 30 can be structured based on required and prescribed optical characteristics in use of the light guide plate 10.

### Second Embodiment

Hereinafter, a light guide plate 40 and a light guide plate 50 formed at the back light device and an illumination device according to the second embodiment of the invention are specifically described in referring to Fig. 7 and Fig. 8. Fig. 7 is a schematic view showing a side surface portion 40C of a light guide plate 40 having different depths of front surface portion recess pattern scars 40B and back surface portion recess pattern scars 40E. Similarly, Fig. 8 is a schematic view showing a side surface portion 50C of a light guide plate 50 having different depths of front surface portion recess pattern scars 50B and back surface portion recess pattern scars 50E.

It is to be noted that the light guide plate 40 and the light guide plate 50 according to the second embodiment are characterized in that the depths of the recess pattern scars at the front surface portion and the back surface portion are made different in a stepwise manner as different from the front surface portion recess pattern scars 10B and the back surface portion recess pattern scars 10E formed on the light guide plate 10 with substantially a uniform depth thereof. The structures of the light guide plate 40 and the light guide plate 50 other than those are substantially the same as the structures of the light guide plate 10 described in the first embodiment. In the light guide plate 40 and the light guide plate 50 according to the second embodiment, the structures and advantages relating to the depth of the recess pattern scars as different from the light guide plate 10 of the first embodiment are specifically described.

In the light guide plate 40 shown in Fig. 7, the depths of the front surface portion recess pattern scars 40B of the front surface portion 40A and the depths of the back surface portion recess pattern scars 40E of the back surface portion 40D are formed to be deeper in a stepwise manner respectively. More specifically, when viewed from the side surface portion 40C, the recess pattern scars are formed so that the recess pattern scars on the front surface and back surface on a right side in Fig. 7 are deeper in the stepwise manner in comparison with the depths of the recess pattern scars of the front surface and back surface on a left side in Fig. 7. Where incident light L3 of the LED light is radiated from the side surface portion 40C on the left side in Fig. 7, outputting of the diffused light is averaged by changing a reflection area of the recess pattern scars around the left side in Fig. 7 from a small one to a large one because, from the optical characteristics, the light density becomes high when coming closer to the light source whereas the light density becomes low when going away from the source. Where incident light L4 of the LED light is radiated from the side surface portion on the right side in Fig. 7, outputting of the diffused light is increased on the right side but decreased on the left side by changing a reflection area of the recess pattern scars around the right side in Fig. 7 from a large one to a small one from the reason described above. That is, this recess pattern scar fabrication is an effective processing method at a time using a single side light source. The light guide plate 40 shown in Fig. 7 is applicable to the back light device 20 shown in Fig. 5 and to the sign light 30 shown in Fig. 6, which are described above. More specifically, with, e.g., the sign light 30B shown in Fig. 6(c), the LED unit 21 may be provided on a side surface of the light guide plate 40 into which incident light L3 comes.

In the light guide plate 50 shown in Fig. 8, the depths of the front surface portion recess pattern scars 50B of the front surface portion 50A and the depths of the back surface portion recess pattern scars 50E of the back surface portion 50D are formed to be deeper as proceeding to a center portion of the light guide plate 50, or in other words, the depths are formed shallow on a side of both ends of the light guide plate 50 and are formed deep at the center portion thereof. Where incident light L5 of the LED light is radiated from the side surface portion 50C on the left side in Fig. 8, outputting of the diffused light at the recess pattern scars on the left side in Fig. 8 is averaged by changing a reflection area of the recess pattern scars on the right side up to the center portion in Fig. 8 from a small one to a large one because, according to the optical characteristics from the left side to the right side in Fig. 8, the light density becomes high when coming closer to the light source whereas the light density becomes low when going away from the source. In substantially the same way, where incident light L6 of the LED light is radiated from the side surface portion 50C on the right side in Fig. 8, outputting of the diffused light at the recess pattern scars on the right side in Fig. 8 is averaged by changing a reflection area of the recess pattern scars on the left side up to the center portion in Fig. 8 from a small one to a large one because, according to the optical characteristics from the right side to the left side in Fig. 8, the light density becomes high when coming closer to the light source whereas the light density becomes low when going away from the source. Accordingly, the entire outputting of the diffused light becomes averaged. That is, this recess pattern scar fabrication is an effective processing method at a time using a double side light source. The light guide plate 50 shown in Fig. 8 is applicable to the back light device 20 shown in Fig. 5 and to the sign light 30 shown in Fig. 6, which are described above. More specifically, with, e.g., the sign light 30C shown in Fig. 6(d), the LED unit 24 may be provided respectively on side surfaces of the light guide plate 40 into which incident light L5 and incident light L6 come.

According to the light guide plate 40 and the light guide plate 50 of the second embodiment, in the manufacturing method for light guide plate using the manufacturing apparatus for light guide plate 1000 described below, the plural reflection dots having arbitrary depths are formed on one major surface of the light guide plate 50 by pressing the ultrasound processing portion 1030 to the one major surface of the light guide plate 50 deeply or shallowly in the stepwise manner. With the light guide plate 40 and the light guide plate 50 thus formed, the diffused light can be outputted in corresponding to the required light emitting surface size, and manufacturing the light guide plate matching an arbitrary specification can be optimized.

### Third Embodiment

Hereinafter, a light guide plate 60 formed at a back light device or an illumination device according to the third embodiment is specifically described in referring to Fig. 9. Fig. 9 is a schematic view showing a side surface portion of the light guide plate 60 having different depths of front surface portion recess pattern scars 60B and back surface portion recess pattern scars 60E and a reflection tape 61 adhered to the light guide plate 60.

The light guide plate 60 in the third embodiment is characterized in having depths of the recess pattern scars of the front surface portion and the back surface portion different in a stepwise manner as different from the front surface portion recess pattern scars 10B and the back surface portion recess pattern scars 1 0E having substantially the uniform depth formed on the light guide plate 10 of the first embodiment, and in being adhered with the reflection tape 61 on one side of the side surface portion of the light guide plate 60. The structures of the light guide plate 60 other than those are substantially the same as the structures of the light guide plate 10 described in the first embodiment. In the light guide plate 60 in the third embodiment, the structures and advantages in association with depths of the recess pattern scars, which are different from the light guide plate 10 in the first embodiment are described specifically.

In regard to the structure of the light guide plate 60, the depths of the front surface portion recess pattern scars 60B of the front surface portion 60A and the depths of the back surface portion recess pattern scars 60E of the back surface portion 60D are formed to be deeper in a stepwise manner from a side surface portion 60C' on a left side in Fig. 9 to a side surface portion 60C" on a right side in Fig. 9. At the side surface portion 60C" at the right end in Fig. 9, however, the depths of the front surface portion recess pattern scars 60B of the front surface portion 60A and the depths of the back surface portion recess pattern scars 60E of the back surface portion 60D both are formed to be correlatively shallow. More specifically, for example, regarding the front surface portion recess pattern scars 60B on the front surface portion 60A shown in Fig. 9, for the depth of the recess pattern scars, the recess pattern scars T1 are shallowest whereas the recess pattern scars T5 are deepest among the depths of the recess pattern scars; the recess pattern scars have a relation of T1 < T2 < T3 < T4 < T5.

In association with advantages from optical characteristics of the light guide plate 60, when incident light L7 of the LED light is emitted from the side surface portion 60C' on the left side in Fig. 9, diffused light can be outputted evenly at the front surface portion 60A and the back surface portion 60D by changing the reflecting area of the recess pattern scars from a small one to a large one from the left side in Fig. 9, because the light density becomes higher as located closer to the light source from its optical characteristics and becomes lower as located remoter. Reflection light L8 occurs upon reflection of the incident light L7 of the LED light at the side surface portion 60C" by the reflection tape 61 adhering to the side surface portion 60C" of the light guide plate 60. Because the reflection light L8 is converted to diffused light at the recess pattern scars, a rate converted from the LED light into the diffused light increases. The reflection light L8 thus generated affects the diffused light at recess pattern scars located adjacently to the side surface portion 60C". Accordingly, both of the depths of the front surface portion recess pattern scars 60B on the front surface portion 60A and the depths of back surface portion recess pattern scars 60E on the back surface portion 60D are formed to be correlatively shallow at the side surface portion 60C". The light guide plate 60 shown in Fig. 9 is applicable to the back light device 20 shown in Fig. 5 and the sign light 30 shown in Fig. 6 described above. More specifically, for example, the sign light 30B shown in Fig. 6(c) is used by providing the LED unit 21 at the side surface portion 60C' of the light guide plate 60 to which the incident light L7 is radiated.

According to the light guide plate 60 of the third embodiment, in the manufacturing method for light guide plate using the manufacturing apparatus for light guide plate 1000 described below, the plural reflection dots having arbitrary depths are formed on one major surface of the light guide plate by pressing the ultrasound processing portion 1030 to the one major surface of the light guide plate deeply or shallowly in the stepwise manner. With the light guide plate 60 thus formed even though having the structure adhering the reflection tape 61 on one side of the side surface portion of the light guide plate 60, the diffused light can be outputted in corresponding to the required light emitting surface size, and manufacturing the light guide plate matching an arbitrary specification can be optimized.

### Fourth Embodiment

Hereinafter, a light guide plate 70 according to the fourth embodiment of the invention and a back light device are described in referring to Fig. 10 through Fig. 12. Figs. 10 are schematic views showing a fabrication f the light guide plate 70; Fig. 10 (a) is a perspective view showing the light guide plate 10 before fabrication for curving; Fig. 10(b) is a perspective view showing the light guide plate 70 after fabrication for curving. Fig. 11 is a perspective view showing the light guide plate 70.

The light guide plate 70 according to the fourth embodiment is characterized in having a curve of a prescribed radius of curvature as different from the light guide plate 10 formed in a flat plate shape in the first embodiment. The structures of the light guide plate 70 other than those are substantially the same as the structures of the light guide plate 10 described in the first embodiment. In the light guide plate 70 in the fourth embodiment, the structures and advantages different from those of the light guide plate 10 in the first embodiment are described specifically.

The light guide plate 70 is structured, in substantially the same way as the light guide plate 10, of a plate shaped portion made of. e. g. a polymethyl methacrylate resin plate formed in a prescribed size with plural recess pattern scars. More specifically, the size of the plate shaped portion is in a rectangular shape of 100 mm x 100 mm through 1450 mm x 1030 mm equivalent to B0 size (JIS standard) and corresponds to a thickness of 2 mm through 12 mm. As shown in Fig. 11, front surface portion recess pattern scars 70B are formed on the front surface portion 70A of the light guide plate 70 whereas back surface portion recess pattern scars 70E are formed on the back surface portion 70D of the light guide plate 70. The recess pattern scars are respectively formed in a pyramid shape scar having, e.g., a long diameter of 0.6 mm and a depth of 0.4 mm and are formed with a pitch of, e.g., 1.2, 1.5, 2.0, and 8.0 mm as for a pitch pattern in a matrix shaped molding scar. Such the light guide plate 70 is formed by curving the plate to have a prescribed radius of curvature as shown in Fig. 10(b) by pressing the plate with a certain pressure in a state contacting the plate to, e.g., a concave surface tool having the prescribed radius of curvature, not shown, after applying heat of a prescribed temperature to the light guide plate 10 formed in a flat plate shape as shown in Fig. 10(a).

Next, a structural example of a back light device 80 disposed with the light guide plate 70 in this embodiment is described in referring to Fig. 12(a) through Fig. 12(e).

Figs. 12 are perspective views showing the back light device 80 using the light guide plate 70 in an exploded state to respective structural members; Fig. 12(a) is a perspective view showing a back light device 80A in a case that no diffusing plate 83 and no reflection sheet 82 is provided on either surface of the light guide plate 70; Fig. 12(b) is a perspective view showing a back light device 80B in a case that the reflection sheet 82 is provided on only one surface of the light guide plate 70; Fig. 12(c) is a perspective view showing the back light device 80C in a case that the diffusing plate 83 is provided on only one surface of the light guide plate 70 and that the reflection sheet 82 is provided on the other surface of the light guide plate 70; Fig. 12(d) is a perspective view showing a back light device 80D in a case that the diffusing plate 83A and the diffusing plate 83B are provided on each surface of the light guide plate 70; Fig. 12(e) is a perspective view showing a back light device 80E at which an LED unit 81 is arranged on each end of the light guide plate 70 in the back light device 80D shown in Fig. 12(d). The respective back light devices 80 formed with the light guide plate 70 shown in Fig. 12(a) through Fig. 12(d) correspond to the respective back light devices 20 formed with the light guide plate 10 described in referring to Fig. 5(a) through Fig. 5(d).

With the back light device 80, for example, the LED unit 81 is disposed on a right side or a left side of the curving light guide plate 70 in Fig. 12(a) through Fig. 12(d). Where the LED unit 81 is disposed in this way, differences of the light between brightness and darkness become large in a surface of the light guide plate 70 if the recess pattern scars are formed only on the front surface portion 70A of the light guide plate 70. Differences of the light between brightness and darkness, however, become small in a surface of the light guide plate 70 if the recess pattern scars are formed even on the back surface portion 70D of the light guide plate 70. If the LED unit 81 is disposed on an upper side or a lower side of the curving light guide plate 70 in Fig. 12(a) through Fig. 12(d), differences of the light between brightness and darkness become small in a surface of the light guide plate 70 even where the recess pattern scars are formed only on the front surface portion 70A of the light guide plate 70.

As described above, according to the manufacturing method for the light guide plate 70 in the fourth embodiment, the light guide plate in a large size can be formed in a shape having an arbitrary radius of curvature by forming the plate to have a curve in the prescribed radius of curvature after applying heat in the prescribed temperature to the light guide plate 10 formed in the flat plate shape. Accordingly, further more people can see the plate at one time even where the plate is located at outdoors by forming the light guide plate 70 into the shape having the arbitrary radius of curvature in accordance with a necessary viewing range.

Although in the first through fourth embodiments described above the light guide plates are described as optical devices used for the back light devices for sign lights, the light guide plate is not limited to those embodiments, and can be modified or altered properly as far as not deviated from the summery of the invention. More specifically, the light guide plate can be used for, e.g., a back light device for liquid crystal display. The light guide plate can be structured for, e.g., an illumination device used for LED illumination device. The LEDs disposed at the LED unit are not limited to white LED, but can be LEDs of any one color among, for example, white, red, blue, and green, or a combination of LEDs of respective colors.

Referring to Fig. 13 through Fig. 22, the structure and advantages of the light guide plate disposed at partition plate devices commonly according to the fifth through the seventh embodiments of the invention are described next specifically. Fig. 13 is a schematic view showing a light guide plate having a basic specification. Fig. 14 through Fig. 20 are schematic views or the like regarding the light guide plate for comparatively describing the structures of recess pattern scars formed on the light guide plates having specifications of five kinds in which sizes and pitches of the recess pattern scars are different. Fig. 21 and Fig. 22 are schematic views regarding the light guide plate for describing recognition by eyes when an object is viewed through the light guide plate.

The light guide plate 100 having a basic specification shown in Fig. 13 includes the following structure. That is, the light guide plate 100 is made of, e.g., an acrylic resin plate, or a methacrylate resin plate, and is formed of a plate shaped portion in a prescribed size in which plural recess pattern scars are formed. More specifically, the size of the light guide plate 100 shaped portion is made from 100mm square with a thickness of 2 mm to 1450 mm x 1030 mm with a thickness of 12 mm equivalent to B0 (JIS) size. As a matter of course, the light guide plate 100 is not limited to those having the above sizes, and can be formed with a larger size. Front surface portion recess pattern scars 100B are formed on front surface portion 100A of the light guide plate 100, and back surface portion recess pattern scars 100E are formed on back surface portion 100D of the light guide plate 100. The recess pattern scars are formed from a pyramid shaped scar having a longer diameter of 0.6 mm and a depth of 0.4 mm, and formed of a matrix shaped molding scar structured with a pitch of, e.g., 1.2, 1.5, 2.0, or 8.0 mm.

The light guide plate 100 having the basic specification possesses the following optical characteristics. That is, the light guide plate 100 generates diffused light at the front surface portion recess pattern scars 100B and the back surface portion recess pattern scars 100E by light entered from the side surface portion 100C of the light guide plate 100 and discharges the diffused light from the front surface portion 100A equivalent to one surface and from the back surface portion 100D equivalent to the other surface, serving as an area light source for approximately uniform discharging. Differences between light's darkness and brightness become small because the number of the recess pattern scars recognizable from the side of the front surface portion 100A and the back surface portion 100D of the light guide plate 100 becomes twice and because the pitch of the recess pattern scars becomes a half where the positions of the back surface portion recess pattern scars 100E are shifted by half pitch each in the X direction and the Y direction with respect to the positions of the front surface portion recess pattern scars 100B of the light guide plate 100 as shown in Fig. 13.

Herein, referring to Fig. 14 through Fig. 20, the structures of the recess pattern scars formed on the light guide plates 110, 120, 130, 140, and 150 having different sizes and pitches of the recess pattern scars are described comparatively and specifically.

The light guide plate 110 shown in Fig. 14 is so formed that the sizes and densities of the front surface portion recess pattern scars 110B formed on the front surface portion 110A and the back surface portion recess pattern scars 110E formed on the back surface portion to be recognizable from the side of the front surface portion 110A are the same respectively. The pitch in the X-axis direction and the Y-axis direction of the front surface portion recess pattern scars 110B formed on the light guide plate 110 is, e.g., 6 mm; the pitch in the X-axis direction and the Y-axis direction of the back surface portion recess pattern scars 110E is, e.g., 6 mm; because the pitches are the same, it is expressed such that the densities of the front surface portion recess pattern scars 11 0B and the back surface portion recess pattern scars 110E are the same. The light guide plate 110 is formed so that the position of the back surface portion recess pattern scars 110E are shifted by a half pitch each in the X-axis direction and the Y-axis direction with respect to the position of the front surface portion recess pattern scars 110B, and this has the same specification as that of the light guide plate 100 described above.

In the light guide plate 110 thus formed, for example as shown in a region 110F, the back surface portion recess pattern scars 110E formed on the back surface portion to be recognizable from the side of the front surface portion 110A are positioned at a middle of the front surface portion recess pattern scars 110B formed on the front surface portion 110A. Accordingly, when the light guide plate 110 is viewed from the side of the front surface portion 110A, it is recognized as a uniformly discharging area light source because the front surface portion recess pattern scars 110B and the back surface portion recess pattern scars 110E have the same pitch and the same size, although the light amount of the diffused light via the front surface portion 110A from the back surface portion recess pattern scars 110E formed on the back surface portion is large in comparison with the light amount of the diffused light from the front surface portion recess pattern scars 110B formed on the front surface portion 110A.

The light guide plate 120 shown in Fig. 15 is so formed, in substantially the same way as the light guide plate 110, as that the size of the front surface portion recess pattern scars 120B formed on the front surface portion 120A is the same as the size of the back surface portion recess pattern scars 120E formed on the back surface portion to be recognizable from the side of the front surface portion 120A. The light guide plate 120 is, however, as different from the light guide plate 110, formed so that the density of the back surface portion recess pattern scars 120E is made four times with respect to the density of the front surface portion recess pattern scars 120B. The pitch in the X-axis direction and the Y-axis direction of the front surface portion recess pattern scars 120B formed on the light guide plate 120 is, e.g., 6 mm; the pitch in the X-axis direction and the Y-axis direction of the back surface portion recess pattern scars 120E is, e.g., 3 mm; because the ratio of the pitches are one to two (1 to 2), it is expressed such that the density of the back surface portion recess pattern scars 120E with respect to the density of the front surface portion recess pattern scars 120B is the four times (multiplicative inverse of 1/2 squared).

In the light guide plate 120 thus formed, for example as shown in a region 120F, the positions of the back surface portion recess pattern scars 120E are shifted by a distance equivalent to a half of the recess pattern scar size each in the X direction and the Y direction with respect to the positions of the front surface portion recess pattern scars 120B in order to render every other back surface portion recess pattern scars 120E formed on the back surface portion to be recognizable from the side of the front surface portion 120A recognizable as adjacent to the front surface portion recess pattern scars 120B formed on the front surface portion 120A. Accordingly, when the light guide plate 120 is viewed from the side of the front surface portion 120A, it is recognized by eyes as an area light source having a prescribed periodical pattern because every other back surface portion recess pattern scars 120E are positioned as adjacent to the front surface portion recess pattern scars 120B.

The light guide plate 130 shown in Fig. 16 is so formed, as different from the light guide plate 110, as that the size of the front surface portion recess pattern scars 130B is the four times of the size of the back surface portion recess pattern scars 130E formed on the back surface portion. The light guide plate 130 further is so formed, in substantially the same way as the light guide plate 120, as that the density of the back surface portion recess pattern scars 130E is made four times of that of the front surface portion recess pattern scars 130B. The pitch in the X-axis direction and the Y-axis direction of the front surface portion recess pattern scars 130B of the light guide plate 130 is, e.g., 6 mm; the pitch in the X-axis direction and the Y-axis direction of the back surface portion recess pattern scars 130E is, e.g., 3 mm; because the ratio of the pitches are one to two (1 to 2), it is expressed such that the density of the back surface portion recess pattern scars 130E with respect to the density of the front surface portion recess pattern scars 130B is the four times (multiplicative inverse of 1/2 squared).

In the light guide plate 130 thus formed, for example as shown in a region 130F, the positions of the back surface portion recess pattern scars 130E are shifted by prescribed distances in the X direction and the Y direction with respect to the positions of the front surface portion recess pattern scars 130B in order to render the front surface portion recess pattern scars 130B formed on the front surface portion 130A located at a center of four back surface portion recess pattern scars 130E formed on the back surface portion to be recognizable from the side of the front surface portion 130A. Accordingly, when the light guide plate 130 is viewed from the side of the front surface portion 130A, it is recognized by eyes as an area light source having a prescribed periodical pattern, which is recognizable more readily than the light guide plate 120, because the front surface portion recess pattern scars 130B having a size as the four times of the back surface portion recess pattern scars 130E are located at the center of four back surface portion recess pattern scars 130E. More specifically, the prescribed pattern appears in a way of a part of the light guide plate 130 as shown in Fig. 17 with a photographic picture.

The light guide plate 140 shown in Fig. 18 is so formed, as different from the light guide plate 110, as that the size of the front surface portion recess pattern scars 140B is the four times of the size of the back surface portion recess pattern scars 140E formed on the back surface portion. The light guide plate 140 further is so formed as that the density of the back surface portion recess pattern scars 140E is made approximately the six times of that of the front surface portion recess pattern scars 140B. The pitch in the X-axis direction and the Y-axis direction of the front surface portion recess pattern scars 140B of the light guide plate 140 is, e.g., 6 mm; the pitch in the X-axis direction and the Y-axis direction of the back surface portion recess pattern scars 140E is, e.g., 2.5 mm; because the ratio of the pitches are 2.5 to 6, it is expressed such that the density of the back surface portion recess pattern scars 140E with respect to the density of the front surface portion recess pattern scars 140B is about six times (multiplicative inverse of 2.5/6 squared).

In the light guide plate 140 thus formed, a value in which the 6mm pitch of the front surface portion recess pattern scars 140B formed on the front surface portion 140A is divided by the 2.5 mm pitch of the back surface portion recess pattern scars 140E formed on the back surface portion to be recognizable from the side of the front surface portion 140A, becomes 2.4, not divided by an integer. Accordingly, when the light guide plate 140 is viewed from the side of the front surface portion 140A, it is recognized by eyes as an area light source having a characteristic pattern, because the back surface portion recess pattern scars 140E are placed in a way accumulating shifting amounts with respect to the front surface portion recess pattern scars 140B. It is to be noted that the least common multiple of the 6mm pitch of the front surface portion recess pattern scars 140B formed on the front surface portion 140A and the 2.5 mm pitch of the back surface portion recess pattern scars 140E formed on the back surface portion to be recognizable from the side of the front surface portion 140A is 30 mm, and therefore, on the entire surface of the front surface portion 140A, it is recognized by eyes as an area light source having a prescribed periodical pattern, which is uniform every 30 mm in the X direction and the Y direction. More specifically, the characteristic pattern appears in a way of the light guide plate 140 as shown in Fig. 19 with a photographic picture.

The light guide plate 150 shown in Fig. 20 is so formed, as different from the light guide plate 110, as that the size of the front surface portion recess pattern scars 150B is the four times of the size of the back surface portion recess pattern scars 150E formed on the back surface portion. The light guide plate 150 further is so formed, as different from the light guide plate 110, as that the density of the back surface portion recess pattern scars 150E is made nine times of that of the front surface portion recess pattern scars 150B. The pitch in the X-axis direction and the Y-axis direction of the front surface portion recess pattern scars 150B of the light guide plate 150 is, e.g., 6 mm; the pitch in the X-axis direction and the Y-axis direction of the back surface portion recess pattern scars 150E is, e.g., 2 mm; because the ratio of the pitches are one to three (1 to 3), it is expressed such that the density of the back surface portion recess pattern scars 150E with respect to the density of the front surface portion recess pattern scars 150B is the nine times (multiplicative inverse of 1/3 squared).

In the light guide plate 150 thus formed, because the 6mm pitch of the front surface portion recess pattern scars 150B formed on the front surface portion 150A is equivalent to an integral multiple of the 2 mm pitch of the back surface portion recess pattern scars 150E formed on the back surface portion to be recognizable from the side of the front surface portion 150A, it is recognized by eyes as an area light source having a uniform pattern across the entire surface of the front surface portion 150A.

The recess pattern scars formed at the light guide plates 110, 120, 130, 140, 150 described above can be fabricated with fabrication dots 44 provided at a tip portion 42B of the ultrasound processing horn 42 of one kind shown in Fig. 4. More specifically, the size of the recess pattern scars can be set arbitrarily by adjusting a time for rendering the ultrasound applied fabrication dots 44 contact to the surface of the light guide plate substrate D. The pitch of the recess pattern scars in the X-direction and the Y-direction can be set arbitrarily by contacting the fabrication dots 44 again to the surface of the light guide plate substrate D upon shifting the fabrication dots 44 by a prescribed distance so as not to overlap the recess pattern scars already formed after the ultrasound applied fabrication dots 44 are made contacting to the surface of the light guide plate substrate D. Accordingly, using the ultrasound processing horn 42 of the one kind, the size and pitch of the recess pattern scars to be formed on the light guide plate can be set arbitrarily. As a matter of course, a specialized ultrasound processing horn 42 can be prepared in accordance with the size and pitch of the recess pattern scars formed on the light guide plate.

Furthermore, referring to Fig. 21 and Fig. 22, visibility at a time that an object B is viewed through the light guide plate 110 is described in detail.

In a state shown in Fig. 21 (a), no light enters from the side surface portion of the light guide plate 110, and no diffused light is generated at the front surface portion recess pattern scars 110B and the back surface portion recess pattern scars 110E. In this situation, the light guide plate 110 can be deemed as a transparent material such as, e.g., a window plate. Viewers accordingly can distinct adequately light L11 entering into eyes E of the viewers from the object B through the light guide plate 110. The light L11 is depicted in a schematic manner to make the invention understandable readily. To the contrary, in a state shown in Fig. 21(b), diffused light L13 is generated at the front surface portion recess pattern scars 110B by incident light L12 entered from a side surface portion of the light guide plate 110, and diffused light L14 is generated at the back surface portion recess pattern scars 110E. In this situation, the light guide plate 110 can be deemed as an area light source. Diffused light L15 generated at the back surface portion recess pattern scars 110E and emitted from the back surface and diffused light L16 generated at the back surface portion recess pattern scars 110B and emitted from the back surface side are emitted as to face to the light L11 from the object B.

In the state shown in Fig. 21 (b), the viewer hardly distinguishes the light L11 of the object B entered into viewer's eyes E through the light guide plate 110 from the diffused light L13 to L16. The incident light L12, and the diffused light L13 to L16 are expressed schematically in order to make the invention understandable readily. When the light guide plate 110 is viewed from the viewer, the diffused light L14 is seen brighter than the diffused light L13. This is because most of the diffused light generated at the recess pattern scars formed on one surface of the major surfaces of the light guide plate 110 is discharged from the other surface of the major surfaces of the light guide plate 110 in a case where light is entered from the side surface portion of the light guide plate 110. As described above, the light guide plate 110 can be functioned as a transparent material likewise a window plate, and can be functioned as a light shielding member likewise a wall material when used as an area light source.

As shown with a light guide plate 160 in Fig. 22(a), the pitch of the back surface portion recess pattern scars 160E may be shifted by a certain amount so as not to be uniformed among the adjacent back surface portion recess pattern scars 160E where the pitch of the back surface portion recess pattern scars 160E is set to, e.g., a half of the pitch of the front surface portion recess pattern scars 160B. Similarly, as shown with a light guide plate 170 in Fig. 22(b), the size of the back surface portion recess pattern scars 170E may be set to, e.g., five times of the size of the front surface portion recess pattern scars 170B. Similarly, as shown with a light guide plate 180 in Fig. 22(c), the size of the front surface portion recess pattern scars 180B may be set to, e.g., three times of the size of the back surface portion recess pattern scars 180E where the pitch of the back surface portion recess pattern scars 180E is set to, e.g., one third (1/3) of the pitch of the front surface portion recess pattern scars 180B. For example, where the size and pitch of the recess pattern scars is set in a way as shown with the light guide plates of the three kinds in Fig. 22, a higher shielding effect is obtainable by increase of the diffused light in comparison with the light guide plate 110 shown in Fig. 21.

### Fifth Embodiment

Hereinafter, the structure and advantages of the partition plate device 300 for partition for sectioning according to the fifth embodiment of the invention are described specifically in reference to Fig. 23. Fig. 23 is a schematic view showing a state that the partition plate device 300 for partition for sectioning according to the fifth embodiment of the invention is installed between tables.

First, the structure of the partition plate device 300 for partition for sectioning according to the fifth embodiment of the invention is described specifically in reference to Fig. 23. The partition plate device 300 is structured of a light guide plate 310, a light source unit 320, and leg members 330.

For the light guide plate 310 of the partition plate device 300, a light guide plate having a structure with, e.g., the specification of the light guide plate 110 through the light guide plate 180 described above is used. The light guide plate 310 curved to have a prescribed radius of curvature as shown in Fig. 23 is molded by pressing the light guide plate on a concave base with certain pressure under a state applying heat to the light guide plate at a prescribed temperature. Heating the light guide plate is performed in a range not significantly affecting the shapes of the recess pattern scars formed on the light guide plate with the ultrasound processing using such as, e.g., an oven or continuous furnace. More specifically, in a case where a methacrylate resin is used for a material of the light guide plate, the light guide plate is heated up to around 120 degrees Celsius and then curved to have a prescribed radius of curvature.

A glass coating agent having functions of such as waterproofing, self-cleaning, and dustproofing may be coated on, or a transparent resin having functions of such as waterproofing, self-cleaning, and dustproofing may cover, either or both of the front surface portion and the back surface portion of the light guide plate 310 of the partition plate device 300. Properties of waterproofing, self-cleaning, and dustproofing may be further improved by coating the glass coating agent on both of the light guide plate 310 and the light source unit 320 as described below, or by covering both of the light guide plate 310 and the light source unit 320 as described below with the transparent resin. The glass coating agent and the transparent resin, if containing a component shielding ultraviolet ray when used, may prevent the light guide plate 310 from being deteriorated due to ultraviolet ray contained in sunlight.

The light source unit 320 of the partition plate device 300 is provided at a light source holder made of aluminum and molded in, e.g., a streamline shape as to be located adjacent to a side surface portion under the light guide plate 310, in which containing a light source or sources not shown. The light source uses a single color LED in any of white, red, orange, yellow, green, blue, indigo, and violet or a combination of those. The light source is not limited to the LED but can be, e.g., a fluorescent lamp, a cold-cathode fluorescent lamp, and a neon tube. The light source is turned on upon supplying drive electric power to the light source in the light source unit 320 from a plug not shown via a power source cable, and diffused light is generated at recess pattern scars where the LED light is emitted to the respective recess pattern scars formed on the front surface portion and the back surface portion of the light guide plate 310 upon rendering the light of the light source enter into the side surface portion of the light guide plate 310.

The leg member 330 of the partition plate device 300 is provided for mounting the light guide plate 310 and the light source unit 320 on a floor or the like in a state holding the plate and unit in a united body. The leg member 330 thus formed is made of, e.g., stainless steel, formed with a pair of sheet metals formed in, e.g., a letter-L shape each positioned on the opposite end of the light guide plate 310 and the light source unit 320 as to face each other, and secured in a manner clamping the light guide plate 310 and the light source unit 320 from the opposite ends with bolts and the like not shown. For example, a plate shape rubber having a certain extendibility may be provided as a damper between the sheet metal in the letter-L shape and the light guide plate 310 and the light source unit 320.

Next, referring to Fig. 23, effects of the partition plate device 300 serving as a partition for sectioning spaces according to a fifth embodiment of the invention is described in detail.

A state of the partition plate device 300 shown in Fig. 23(a), the light source of the light source unit 320 provided adjacent to a side surface portion under the light guide plate 310 is turned off. In this situation, the light guide plate 310 can be deemed as a transparent member. Accordingly, a table and chairs placed beyond the partition plate device 300 can be viewed through the light guide plate 310 from each side as shown in Fig. 23(a). To the contrary, in a state of the partition plate device 300 shown in Fig. 23(b), the light source of the light source unit 320 provided adjacent to a side surface portion under the light guide plate 310 is turned on, thereby generating diffused light at the plural recess pattern scars formed on the light guide plate 310. In this situation, the light guide plate 310 may be deemed as an area light source emitting light in a prescribed color. Accordingly, a table and chairs placed beyond the partition plate device 300 can be hardly viewed through the light guide plate 310 from each side as shown in Fig. 23(b) according to the principle described in use of Fig. 21.

As described above, according to the partition plate device 300 serving as a partition for sectioning spaces according to the fifth embodiment, the light guide plate 310 can be functioned as a transparent member where the light source of the light source unit 320 is turned off as shown in Fig. 23(a), and the light guide plate 310 can be functioned as a light shielding member likewise a partition while using the light guide plate 310 as an area light source where the light source of the light source unit 320 is turned on as shown in Fig. 23(b). The light guide plate 310 can be further functioned as a partition made of an area light source having a prescribed periodical pattern where, e.g., the light guide plate 120 shown in Fig. 15 having different sizes and pitches of the front surface portion recess pattern scars formed on the front surface portion and the back surface portion recess pattern scars formed on the back surface portion, as well as the light guide plate 130 shown in Fig. 16 are used for the light guide plate 310 of the partition plate device 300.

### Sixth Embodiment

Hereinafter, referring to Fig. 24, a structure and effects of the partition plate device 400 for inner wall window of a building according to the sixth embodiment of the invention is described in detail. It is to be noted that Fig. 24 is a schematic view showing a state that the partition plate device 400 for inner wall window of the building is built in an inner wall.

The partition plate device 400 for inner wall window of the building according to the sixth embodiment of the invention has a feature in a usage different from that of the partition plate device 300 according to the fifth embodiment. It is to be noted that the structures of the sixth embodiment other than those are the same as those described in the fifth embodiment. In the sixth embodiment, the structures different from the fifth embodiment are mainly described.

First, referring to Fig. 24, the structure of the partition plate device 400 for inner wall window of the building according to the sixth embodiment of the invention is described in detail. The partition plate device 400 is structured of a light guide plate 410 and a light source unit 420.

For the light guide plate 410 of the partition plate device 400, for example, a light guide plate having a specification of any one of the light guide plates 110 to 180 described above may be used. A glass coating agent having functions of such as waterproofing, self-cleaning, and dustproofing may be coated on, or a transparent resin having functions of such as waterproofing, self-cleaning, and dustproofing may cover, either or both of the front surface portion and the back surface portion of the light guide plate 410. The light guide plate 410 thus formed is built in an inner wall partitioning rooms for serving as a window. The light source unit 420 of the partition plate device 400 is provided at a light source holder made of aluminum and molded in, e.g., a bar shape as to be located adjacent to a side surface portion under the light guide plate 410, in which containing a light source or sources not shown. The detailed structure of the light source unit 420 is substantially the same as the structure of the light source unit 320 of the partition plate device 300 described above. The light source unit 420 may be embedded in an interior of the inner wall as shown in Fig. 24, or may be built in the inner wall in an exposed manner in substantially the same way as the light guide plate 410.

Next, referring to Fig. 24, the effects of the partition plate device 400 for inner wall window of the building according to the sixth embodiment of the invention is described in detail.

In a state of the partition plate device 400 shown in Fig. 24(a), the light source of the light source unit 420 disposed adjacent to the side surface portion under the light guide plate 410 is turned off. In this situation, the light guide plate 410 is equivalent to a window disposed in an inner wall for partitioning the rooms. Accordingly, as shown in Fig. 24(a), a table, chairs, and plants provided in the next room beyond the partition plate device 400 can be recognized by eyes through the light guide plate 410. To the contrary, in a state of the partition plate device 400 shown in Fig. 24(b), the light source of the light source unit 420 disposed adjacent to the side surface portion under the light guide plate 410 is turned on, and diffused light is generated at the plural recess pattern scars formed on the light guide plate 410. In this situation, the light guide plate 410 can be deemed as an area light source emitting in a prescribed color. Therefore, as shown in Fig. 24(b), the room provided with a bookshelf can hardly be recognized by eyes through the light guide plate 410 from the next room in which the table, the chairs, and the plants are provided.

As described above, according to the partition plate device 400 for inner wall window of the building according to the sixth embodiment, the light guide plate 410 can be functioned as a transparent window for partitioning the rooms where the light source of the light source unit 420 is turned off as shown in Fig. 24(a), and the light guide plate 410 can be functioned as a light shielding member likewise an inner wall while using the light guide plate 410 as an area light source where the light source of the light source unit 420 is turned on as shown in Fig. 24(b). The light guide plate 410 can be further functioned as an inner wall made of an area light source having a prescribed periodical pattern where, e.g., the light guide plate 120 shown in Fig. 15 having different sizes and pitches of the front surface portion recess pattern scars formed on the front surface portion and the back surface portion recess pattern scars formed on the back surface portion, as well as the light guide plate 130 shown in Fig. 16 are used for the light guide plate 410 of the partition plate device 400.

### Seventh Embodiment

Hereinafter, referring to Fig. 25, a structure and effects of the partition plate device 500 for outer wall window of a building according to the seventh embodiment of the invention is described in detail. It is to be noted that Fig. 25 is a schematic view showing a state that the partition plate device 500 for outer wall window of the building is built in an outer wall.

The partition plate device 500 for inner wall window of the building according to the seventh embodiment of the invention has a feature in a usage different from that of the partition plate device 300 according to the fifth embodiment and from that of the partition plate device 400 according to the sixth embodiment. It is to be noted that the structures of the seventh embodiment other than those are the same as those described in the fifth and sixth embodiments. In the seventh embodiment, the structures different from the fifth and sixth embodiments are mainly described.

First, referring to Fig. 25, the structure of the partition plate device 500 for outer wall window of the building according to the seventh embodiment of the invention is described in detail. The partition plate device 500 is structured of a light guide plate 510 and a light source unit 520.

For the light guide plate 510 of the partition plate device 500, for example, a light guide plate having a specification of any one of the light guide plates 110 to 180 described above may be used. A glass coating agent having functions of such as waterproofing, self-cleaning, and dustproofing may be coated on, or a transparent resin having functions of such as waterproofing, self-cleaning, and dustproofing may cover, either or both of the front surface portion and the back surface portion of the light guide plate 510. The light guide plate 510 thus formed is built in an outer wall of the building for serving as a window. The light source unit 520 of the partition plate device 500 is provided at a light source holder made of aluminum and molded in, e.g., a bar shape as to be located adjacent to a side surface portion under the light guide plate 510, in which containing a light source or sources not shown. The detailed structure of the light source unit 520 is substantially the same as the structure of the light source unit 320 of the partition plate device 300 described above. The light source unit 520 thus formed may be embedded in an interior of the outer wall of the building as shown in Fig. 25, or may be built in the outer wall in an exposed manner in substantially the same way as the light guide plate 510 where being formed to shield, such as e.g., rain, and dust.

Next, referring to Fig. 25, the effects of the partition plate device 500 for outer wall window of the building according to the seventh embodiment of the invention is described in detail.

In a state of the partition plate device 500 shown in Fig. 25(a), the light source of the light source unit 520 disposed adjacent to the side surface portion under the light guide plate 510 is turned off. In this situation, the light guide plate 510 is equivalent to an outer window of a building. Accordingly, as shown in Fig. 25(a), such as plural buildings and trees, etc. located outside the partition plate device 500 can be recognized by eyes through the light guide plate 510. To the contrary, in a state of the partition plate device 500 shown in Fig. 25(b), the light source of the light source unit 520 disposed adjacent to the side surface portion under the light guide plate 510 is turned on, and diffused light is generated at the plural recess pattern scars formed on the light guide plate 510. In this situation, the light guide plate 510 can be deemed as an area light source emitting in a prescribed color. Therefore, as shown in Fig. 25(b), the room provided with the table and chairs can hardly be recognized by eyes through the light guide plate 510 from the exterior of the building at which, e.g., the plural buildings and trees are provided.

As described above, according to the partition plate device 500 for outer wall window of the building according to the seventh embodiment, the partition plate device 500 can be functioned as a transparent window provided in the outer wall of the building where the light source of the light source unit 520 is turned off as shown in Fig. 25(a), and the light guide plate 510 can be functioned as a light shielding member likewise an outer wall while using the light guide plate 510 as an area light source where the light source of the light source unit 520 is turned on as shown in Fig. 25(b). The light guide plate 510 of the partition plate device 500 can be further functioned as an outer wall made of an area light source having a prescribed periodical pattern where, e.g., the light guide plate 120 shown in Fig. 15 having different sizes and pitches of the front surface portion recess pattern scars formed on the front surface portion and the back surface portion recess pattern scars formed on the back surface portion, as well as the light guide plate 130 shown in Fig. 16 are used for the light guide plate 510 of the partition plate device 500.

Finally, a manufacturing apparatus for light guide plate for processing the light guide plates disposed in the respective devices in the first through seventh embodiments of the invention and a light guide plate manufacturing method using the manufacturing apparatus for light guide plate are described specifically in referring to Fig. 26 through Fig. 32.

First, a structure of the manufacturing apparatus for light guide plate 1000 for processing the light guide plate disposed in the respective devices in the first through seventh embodiments of the invention is described in referring to Fig. 26 through Fig. 29. Fig. 26 is a perspective view showing the manufacturing apparatus for light guide plate 1000, and Fig. 27 is a front view showing the manufacturing apparatus for light guide plate 1000. Fig. 29 is a side view illustrating ultrasound processing to a light guide plate substrate D by means of an ultrasound processing portion 1040 provided at the manufacturing apparatus for light guide plate 1000. Fig. 28 is a schematic view showing a tip portion 1042B of an ultrasound processing horn 1042 of the ultrasound processing portion 1040 disposed at the manufacturing apparatus for light guide plate 1000.

The manufacturing apparatus for light guide plate 1000 as shown in Fig. 26 includes a housing 1010 mounting and containing respective structural devices forming the manufacturing apparatus for light guide plate 1000, a work table 1020 securing a light guide plate substrate D as a substrate material to later form the light guide plate by, e.g., vacuum suction, a transfer mechanism 1030 transferring the ultrasound processing portion 1040 described below correlatively with respect to the light guide plate substrate D, the ultrasound processing portion 1040 heating and melting partly a major surface of the light guide plate substrate D by ultrasound vibration upon contacting projecting portions of the ultrasound processing horn 1042 to the major surface of the light guide plate substrate D to form recess pattern scars, and a controller 1050 controlling ultrasound processing done by the ultrasound processing portion 1040 based on fabrication conditions for the light guide plate substrate D.

Hereinafter, the respective structural devices for constituting the manufacturing apparatus for light guide plate 1000, including the housing 1010, the work table 1020, the transfer mechanism 1030, the ultrasound processing portion 1040, and the controller 1050, are described. For conveniences of the description, the description is made using a three-dimensional orthogonal coordinate or two-dimensional orthogonal coordinate shown in each drawing.

The housing 1010 for forming the manufacturing apparatus for light guide plate 1000 mounts and contains as shown in, e.g., Fig. 26, the respective structural devices for constituting the manufacturing apparatus for light guide plate 1000. The housing 1010 thus formed is made of an upper stage plate 1011, supports 1012, a lower stage plate 1013, and legs 1014. Hereinafter, the structure of the housing 1010 is described. The upper stage plate 1011 and the lower stage plate 1013 of the housing 1010 are made of a stainless steel and made in a plate shape. A controller 1034 for the transfer mechanism 1030, a ultrasound vibrator 1043 for the ultrasound processing portion 1040, and a controlling device 1054 of the controller 1050, etc. are mounted on the lower stage plate 1013 thus formed. The support 1012 of the housing 1010 is made of, e.g., stainless steel and of a hollow square bar in a bar shape. A support member 1051 of the controller 1050 is attached to the support 1012 of the housing 1010 thus formed. The leg 1014 of the housing 1010 is made in a cylindrical shape and made of, e.g., enforced plastic.

The work table 1020 forming the manufacturing apparatus for light guide plate 1000 secures the light guide plate substrate D as a substrate material to later form the light guide plate by, e.g., vacuum suction as shown in, e.g., Fig. 26. The work table 1020 thus formed is constituted of a processing base 1021, a vacuum pump 1022, suction pipes 1023, distributors 1024, and connectors 1025. Hereinafter, the structure of the work table 1020 is described. The processing base 1021 of the work table 1020 is made of, e.g., aluminum and formed of a plate shaped member having plural suction holes 1021 A. The processing base 1021 thus formed is provided at the upper stage plate 1011 of the housing 1010. As shown in, e.g., Fig. 27, one end of the suction pipes 1023 is coupled to the vacuum pump 1022, whereas the other ends of the suction pipes 1023 are coupled to the suction holes 1021 A provided in a plural number in the processing base 1021 as shown in, e.g., Fig. 29 via the distributors 1024 in use of the connectors 1025. It is to be noted that the vacuum suction of the light guide plate substrate D toward the suction holes 1021A of the processing base 1021 prevents the light guide plate substrate D from positionally shifting during the processing and corrects warp and bending of the light guide plate substrate D.

The transfer mechanism 1030 forming the manufacturing apparatus for light guide plate 1000 makes the ultrasound processing portion 1040 correlatively move with respect to the light guide plate substrate D secured to the processing base 1020 as shown in, e.g., Fig. 26. More specifically, the transfer mechanism 1030 renders the ultrasound processing portion 1040 move to a prescribed position in X-axis, Y-axis, and Z-axis directions shown in Fig. 26 based on positional information for the light guide plate substrate D inputted from, e.g., the control panel 1052 of the controller 1050. The transfer mechanism 1030 thus formed includes an X-axis rail member 1031, an auxiliary X-axis rail member 1031', a Y-axis rail member 1032, a Z-axis rail member 1033, and a controller 1034. The controller 1034 is a control device for transferring the ultrasound processing portion 1040 to the prescribed position using the respective rail members based on the processing information of the light guide plate substrate D entered from the control panel 1052 of the controller 1050.

The ultrasound processing portion 1040 forming the manufacturing apparatus for light guide plate 1000 as shown in, e.g., Fig. 29 forms recess pattern scars by partly heating and melting the major surface with ultrasound vibration upon contacting projections of the ultrasound processing horn 1042 to the major surface of the light guide plate substrate D. The ultrasound processing portion 1040 thus formed is constituted of a support member 1041, the ultrasound processing horn 1042, and the ultrasound vibrator 1043. More specifically, the ultrasound processing horn 1042 of the ultrasound processing portion 1040 is couple to the support member 1041 arranged at a plate 1033B connected to a movable table 1033A of the Z-axis rail member 1033, and is constituted of a tip portion 1042B for performing ultrasound processing treatment upon contacting to a surface of the light guide plate substrate D based on a drive signal supplied from the ultrasound vibrator 1043, and a vibrator 1042A having a piezoelectric element and a corn member, not shown. As shown in Fig. 29(a), the plate 1033B of the Z-axis rail member 1033 is formed with a stopper member 1033D provided via a support block 1033C and supports the ultrasound processing portion 1040. When the ultrasound processing portion 1040 begins moving in a lower direction in the drawing and when the tip portion 1042B of the ultrasound processing horn 1042 contacts the surface of the light guide plate substrate D, the ultrasound processing portion 1040 stops as shown in Fig. 29(b), and the ultrasound processing horn 1042 goes up a prescribed time later after the support block 1033C and the stopper member 1033D separate from each other.

As for the ultrasound processing portion 1040 forming the manufacturing apparatus for light guide plate 1000, as shown in, e.g., Fig.28, fabrication dots 1044 serving as projections for forming recess pattern scars by heating partly and melting the major surface of the light guide plate substrate D, are formed in a matrix shape, for instance, in a number of twenty-five in five rows and five columns on the tip portion 1042B of the ultrasound processing horn. The shape of the fabrication dots 1044 is, for example, a pyramid. By contacting the fabrication dots 1044 applied ultrasound to the surface of the light guide plate substrate D, the ultrasound vibration heats partly and melts the light guide plate substrate D, thereby forming recess pattern scars reflecting the shape of the fabrication dots 1044 on the surface of the light guide plate substrate D.

The controller 1050 forming the manufacturing apparatus for light guide plate 1000 does control of ultrasound processing made by the ultrasound processor 1040 under the processing condition of the light guide plate substrate D, as shown in, e.g., Fig.26. The controller 1050 thus formed is composed of a support member 1051, a control panel 1052, a display panel 1053, and a controlling device 1054. The following is a description of the composition of the controller 1050. The support member 1051 in the controller 1050 is provided in any one of the plural supports 1012 arranged at the housing 1010, and formed with the control panel 1052 and the display panel 1053. The control panel 1052 in the controller 1050 is for users to input the processing conditions and the like of the light guide plate substrate D to the controlling device 1054. The display panel 1053 of the controller 1050 displays the processing conditions and the like of the light guide plate substrate D entered from the control panel 1052. The controlling device 1054 in the controller 1050 is constituted of a control substrate for operating the whole manufacturing apparatus for light guide plate 1000 based on prescribed control and a memory recording control conditions.

Next, the manufacturing method for light guide plate 1100 done by the manufacturing apparatus for light guide plate 1000 for processing the light guide plate arranged in the respective devices according to the first to seventh embodiments of the invention, is described. More specifically, formation of recess pattern scars on the light guide plate 1100, in consideration of deviations in the shape of the light guide plate 1100, is described in referring to Figs. 30.

Figs. 30 are schematic views showing a state of the embossing process for forming recess pattern scars formed on the light guide plate 1100; Fig. 30(a) through Fig. 30(e) are schematic views sequentially showing states of measuring the processing start reference height of the light guide plate 1100 prior to the embossing process and then performing the embossing process to the light guide plate 1100 in compliance with the processing start reference height.

As shown in Fig. 30(a), a processing start reference height E1 of the surface of the light guide plate 1100 is detected by rendering a movable type probe S disposed at a measuring portion, not shown, of the manufacturing apparatus for light guide plate 1000 contact to the surface of the light guide plate 1100. A transparent methacrylate resin plate in a prescribed shape may be used for the light guide plate 1100. The probe S is not limited to a mechanical structure and may have, e.g., a structure receiving reflecting light from the surface of the light guide plate 1100 upon emitting a measuring light from a measuring portion, not shown, of the manufacturing apparatus for light guide plate 1000.

As shown in Fig. 30(b), after the tip portion 1042B of the ultrasound processing horn 1042 attached to the manufacturing apparatus for light guide plate 1000 is moved to a position above the front surface portion 1100A detecting the processing start reference height E1, ultrasound vibrations are applied to the ultrasound processing horn 1042 with the processing start reference height E1 as a reference, and the tip portion 1042B of the ultrasound processing horn 1042 is moved down to a prescribed depth from the processing start reference height E1 of the front surface portion 1100A. A processing start reference height E2 on a surface of the light guide plate 1100 serving as a subsequent ultrasound processing place is detected by the movable type probe S disposed at the measuring portion of the manufacturing apparatus for light guide plate 1000.

As shown in Fig. 30(c), after the tip portion 1042B of the ultrasound processing horn 1042 attached to the manufacturing apparatus for light guide plate 1000 is moved to a position above the front surface portion 1100A detecting the processing start reference height E2, ultrasound vibrations are applied to the ultrasound processing horn 1042 with the processing start reference height E2 as a reference, and the tip portion 1042B of the ultrasound processing horn 1042 is moved down to a prescribed depth from the processing start reference height E2 of the front surface portion 1100A. A processing start reference height E3 on a surface of the light guide plate 1100 serving as a subsequent ultrasound processing place is detected by the movable type probe S disposed at the measuring portion of the manufacturing apparatus for light guide plate 1000.

As shown in Fig. 30(d), after the tip portion 1042B of the ultrasound processing horn 1042 attached to the manufacturing apparatus for light guide plate 1000 is moved to a position above the front surface portion 1100A detecting the processing start reference height E3, ultrasound vibrations are applied to the ultrasound processing horn 1042 with the processing start reference height E3 as a reference, and the tip portion 1042B of the ultrasound processing horn 1042 is moved down to a prescribed depth from the processing start reference height E3 of the front surface portion 1100A. A processing start reference height E4 on a surface of the light guide plate 1100 serving as a subsequent ultrasound processing place is detected by the movable type probe S disposed at the measuring portion of the manufacturing apparatus for light guide plate 1000.

Similarly as shown in Fig. 30(e), after the tip portion 1042B of the ultrasound processing horn 1042 attached to the manufacturing apparatus for light guide plate 1000 is moved to a position above the front surface portion 1100A detecting the processing start reference height E4, ultrasound vibrations are applied to the ultrasound processing horn 1042 with the processing start reference height E4 as a reference, and the tip portion 1042B of the ultrasound processing horn 1042 is moved down to a prescribed depth from the processing start reference height H4 of the front surface portion 1100A.

Next, advantages from the formation of the recess pattern scars formed on the light guide plate 1100 as described above is described specifically in referring to Fig. 31 and Fig. 32.

Figs. 31 are schematic views showing a side surface portion 1110C of the light guide plate 1110 according to the invention; Fig. 31 (a) is a schematic view showing the side surface portion 1110C of the light guide plate 1110 in a case where the light guide plate 1110 has no curving or deviation in thickness; Fig. 31 (b) is a schematic showing the side surface portion 1110C of the light guide plate 1110 in a case where the light guide plate 1110 has some curving or deviation in thickness. Fig. 32 is a schematic view showing the side surface portion 1120A of the light guide plate 1120 in a case where the light guide plate 1120 has some curving or deviation in thickness in a conventional manufacture of the light guide plate 1120.

In a case that the light guide plate 1110 has no curving or unevenness in thickness as shown in Fig. 31 (a), front surface portion recess pattern scars 1110B having a constant depth with respect to a front surface portion 1110A can be formed regardless the position of the front surface portion 1110A of the light guide plate 1110 even without detecting any processing start reference height of the front surface portion 1110A at each processing. In substantially the same way, back surface portion recess pattern scars 1110E having a constant depth with respect to a back surface portion 1110D can be formed regardless the position of the back surface portion 1110D of the light guide plate 1110.

As shown in Fig. 31(b), in a case that the light guide plate 1110 has some curving or unevenness in thickness, however, front surface portion recess pattern scars 1110B having a constant depth with respect to the front surface portion 1110A cannot be formed if no detection of the processing start reference height of the front surface portion 1110A is made at each processing. In substantially the same way, back surface portion recess pattern scars 1110E having a constant depth with respect to the back surface portion 1110D cannot be formed if no detection of the processing start reference height of the back surface portion 1110D is made at each processing.

As the substrate for the light guide plate 1110 herein, e.g., a resin plate, or namely, a methacrylate resin plate is used. Such a methacrylate resin plate is manufactured by an extrusion method, and individual deviations in thickness of the methacrylate resin plate may reach approximately plus and minus one (1) mm for having a thickness of eight (8) mm as a reference value. Unevenness in thickness for a single methacrylate resin plate tends to be large, and more specifically, the difference between the maximum thickness and the minimum thickness may reach about 0.4 mm. The methacrylate resin plate may be deformed in a reversely warping manner upon absorption of moisture. Thus, the methacrylate resin plate suffers from deviations in the thickness component due to individual differences, unevenness in thickness, and deformation from warping or the like. To the contrary, the depth of the front surface portion recess pattern scars 1110B formed on the front surface portion 1110A of the light guide plate 1200 and the depth of the back surface portion recess pattern scars 1110E formed on the back surface portion 1110D of the light guide plate 1110 are frequently set to 0.3 mm to 0.5 mm.

Accordingly, in the processing of the methacrylate resin plate serving as the substrate for the light guide plate 1110, it is required that after detecting the height with the movable type probe S attached to the measuring portion of the manufacturing apparatus for light guide plate 1000, ultrasound vibrations are applied to the ultrasound processing horn 1042 with the processing start reference height as a reference, and the tip portion 1042B of the ultrasound processing horn 1042 is moved down to a prescribed depth from the surface of the methacrylate resin plate.

If no processing start reference height on the surface of the methacrylate resin plate is detected, in a way of the conventional light guide plate 1120 as shown in Fig. 32, front surface portion recess pattern scars 1120B having a constant depth with respect to the front surface portion 1120A of the light guide plate 1120 cannot be formed. In substantially the same way, back surface portion recess pattern scars 1120E having a constant depth with respect to the back surface portion 1120D of the light guide plate 1120 cannot be formed.

### Description of reference numbers

10,40,50,60,70,100,110,120,130,140,150,160,170,180,310,410,510,1100,1110,1120 light guide plate
10A,40A,50A,60A,70A,100A,10A,120A,130A,140A,150A,1100A,1110A,1120A front surface portion
1 0B,40B,50B,60B,70B,100B,110B,120B,130B,140B,150B,160B,170B,180B,1110B,1120B front surface portion recess pattern scars
10C,40C,50C,60C',60C",70C,100C,1110C,1120C side surface portion
10D,40D,50D,60D 70D,100D,1110D,1120D back surface portion
1 0E,40E,50E,60E,70E,100E,110E,120E,130E,140E,150E,160E,170E,180E,1110E,1120E back surface portion recess pattern scars
10M one surface
10N the other surface
110F,120F,130F region
61 reflection tape
20,20A,20B,20C,20D,80,80A,80B,80C,80D,80E back light device
21,24,81 LED unit
22,82 reflection sheet
23,23A,23B,83,83A,83B diffusion plate
30,30A,30B guide lamp
31,31A,31B,31C sign display plate
300,400,500 partition plate device
320,420,520 light source unit
330 leg member
1000 manufacturing apparatus for light guide plate
1010 housing
1011 upper stage plate
1012 support
1013 lower stage plate
1014 leg
1020 work table
1021 processing base
1021 A suction hole
1022 vacuum pump
1023 suction pipe
1024 distributor
1025 connector
1030 transfer mechanism
1031 X-axis rail member
1031' auxiliary X-axis rail member
1032 Y-axis rail member
1033 X-axis rail member
1033A movable table
1033B plate
1033C support block
1033D stopper member
1034 controller
1040 ultrasound processing portion
1041 support member
1042 ultrasound processing horn
1042A vibrator
1042B tip portion
1043 ultrasound vibrator
1044 fabrication dot
1050 controller
1051 support member
1052 control panel
1053 display panel
1054 control device
S probe
E1,E2,E3,E4 processing start reference height
P1 pitch
P2 half pitch
L1,L2,L3,L4,L5,L6,L7,L12 incident light
L8 reflection light
L11 light
L13,L14,L15,L16 diffused light
T1,T2,T3,T4,T5 recess pattern scars
D light guide plate substrate
B object
E eye

## Claims

1. A partition plate device comprising:
a light guide plate having, on double sides as major surfaces thereof, plural recess pattern scars formed partly melting through vibration of ultrasound under contacting fabrication dots provided in a matrix shape at an ultrasound fabrication horn to major surfaces thereof with pressure; and
a light source unit rendering light enter from a side surface of the light guide plate and diffused light occur from the recess pattern scars,
wherein the light guide plate functions as a transparent member while no light enters from the light source unit and functions as a light shielding member made of an area light source having a prescribed pattern formed with the recess pattern scars while light enters from the light source unit.

2. The partition plate device according to Claim 1, wherein the light guide plate has different pitches between the recess pattern scars on one side and the recess pattern scars on the other side, and wherein the plural recess pattern scars structuring the prescribed pattern are formed by setting a value of the length of a longer pitch on one side divided by the length of a shorter pitch on the other side to be not an integer.

3. The partition plate device according to Claim 1, wherein the light guide plate is formed with the plural recess pattern scars structuring the prescribed pattern according to the same or different sizes or pitches on the double sides, or a combination of the sizes and pitches on the double sides.

4. The partition plate device according to Claim 1, wherein the light guide plate is formed with the plural recess pattern scars structuring the prescribed pattern so that the plural recess pattern scars formed on the double sides are not facing to each other with respect to the major surfaces.

5. The partition plate device according to Claim 1, wherein the light guide plate is coated with a glass coating agent on the major surface or covered with a transparent resin on the major surface.

6. The partition plate device according to Claim 1, wherein the light source unit is made of LED, fluorescent tube, cooled cathode ray tube, or neon tube in a color of white, red, orange, yellow, green, blue, navy, or violet or a color of a combination of those colors.

7. A manufacturing method for the light guide plate according to Claim 1, comprising the steps of:
arranging fabrication dots in a matrix shape on a rectangular tip surface of an ultrasound processing horn;
forming, on one major surface of a light guide plate substrate serving as a substrate for the light guide plate before fabrication, reflection dots reflecting the fabrication dots on the tip surface by pressing the tip surface of the ultrasound processing horn to the one major surface of the light guide plate substrate,
repeating the formation of the reflection dots by transferring the ultrasound processing horn within a surface of the major surface with respect to the light guide plate substrate to form the reflection dots in a prescribed range of the one major surface of the light guide plate substrate; and
thereby forming the reflection dots on the double sides of the light guide plate substrate respectively so as not to be placed at the same position between the double sides.

8. The manufacturing method for the light guide plate according to Claim 7, wherein the light guide plate substrate is applied with heat and is curved to have a prescribed radius of curvature.

9. The manufacturing method for the light guide plate according to Claim 7, wherein the fabrication dots are made in a pyramid shape.

10. The manufacturing method for the light guide plate according to Claim 9, wherein the fabrication dots are formed with the same pitch as to extend in a matrix shape, each of which has in the pyramid shape of the same shape, respectively.

11. The manufacturing method for the light guide plate according to Claim 9, wherein at least one direction of extending directions of ridges of the fabrication dots in the pyramid shape is substantially parallel to an incident direction of light entering from a side surface of the light guide plate substrate.

12. The manufacturing method for the light guide plate according to Claim 7, wherein the ultrasound processing horn correlatively moves by a portion of the range of the tip surface with respect to the light guide plate substrate after the reflection dots reflecting the fabrication dots are formed by the ultrasound processing horn, to form the subsequent reflection dots reflecting the fabrication dots by the ultrasound processing horn.

13. The manufacturing method for the light guide plate according to Claim 7, wherein the light guide plate substrate is a transparent resin plate.

14. The manufacturing method for the light guide plate according to Claim 7, wherein the reflection dots are formed on the single side or double sides of the opposing major surfaces of the light guide plate substrate.

15. The manufacturing method for the light guide plate according to Claim 7, wherein the reflection dots are formed on the single side or double sides of the opposing major surfaces of the light guide plate substrate in a way such that the depths of the reflection dots are formed stepwise differently.

16. A light guide plate manufactured from the manufacturing method for the light guide plate according to Claim 7 through Claim 15.

17. A backlight device
having the light guide plate according to Claim 16.

18. An illumination device having the light guide plate according to Claim 16.
